# EUROPEAN PATENT SPECIFICATION

(11) **EP 0 968 769 B1**
(45) Date of publication and mention of the grant of the patent: **19.04.2006**
(21) Application number: 99305108.5
(22) Date of filing: 29.06.1999
(51) Int. Cl.: B05C 11/08, B05D 1/40, G03F 7/16, G11B 7/24, G11B 7/26

(54) **Optical information-recording medium, method for producing the same, and air-conditioning system for producing optical information recording medium**
Optisches Informationsaufzeichnungsmedium, Verfahren und Klimatisierungssystem zu seiner Herstellung
Milieu d'enregistrement optique d'information et procédé et système de conditionnement d'air pour sa fabrication

(30) Priority: 30.06.1998 JP 18530998; 30.06.1998 JP 18532398; 18.09.1998 JP 26465198
(43) Date of publication of application: 05.01.2000
(73) Proprietor: FUJI PHOTO FILM CO., LTD., Minamiashigara-shi, Kanagawa-ken 250-0193 (JP)
(72) Inventor: Usami, Yoshihisa, Odawara-shi, Kanagawa-Ken 250-0001 (JP); Itaya, Tomoyoshi, c/o Fuji Magne-Disk Co. Ltd., Hamura City, Tokyo 205-0023 (JP)
(74) Representative: Hall, Matthew Benjamin

(56) References cited:
- EP-A- 1 024 484
- PATENT ABSTRACTS OF JAPAN vol. 018, no. 473 (P-1795), 2 September 1994 (1994-09-02) & JP 06 150371 A (PIONEER ELECTRON CORP), 31 May 1994 (1994-05-31)
- PATENT ABSTRACTS OF JAPAN vol. 018, no. 473 (P-1795), 2 September 1994 (1994-09-02) & JP 06 150403 A (PIONEER ELECTRON CORP), 31 May 1994 (1994-05-31)

## Description

The present invention relates to an optical information-recording medium of the heat mode type which makes it possible to record and reproduce information thereon by using a laser beam, a method for producing the same, and an air-conditioning system for producing the optical information-recording medium, which is preferably used for an equipment for producing the optical information-recording medium.

In general, the optical information-recording medium (optical disk), which is capable of recording information only once by using the laser beam, includes, for example, write-once CD (so-called CD-R) and DVD-R. Such a medium is advantageous in that a small amount of CD's can be quickly supplied to the market at a reasonable price, as compared with the production of the conventional CD (compact disk). The demand for such a medium increases in accordance with the recent popularization of personal computers or the like.

The CD-R type optical information-recording medium has its representative structure comprising a recording layer composed of an organic dye, a light-reflective layer composed of a metal such as gold, and a protective layer made of a resin, the layers being stacked in this order on a transparent disk-shaped substrate having a thickness of about 1.2 mm (see, for example, Japanese Laid-Open Patent Publication No. 6-150371).

The DVD-R type optical information-recording medium has its structure comprising two disk-shaped substrates (each having a thickness of about 0.6 mm) which are stuck to one another with their respective information-recording surfaces being opposed inwardly respectively. The DVD-R type optical information-recording medium has such a feature that the amount of information to be recorded thereon is large.

Information is written (recorded) on the optical information-recording medium by radiating a laser beam in the near infrared region (laser beam usually having a wavelength in the vicinity of 780 nm in the case of CD-R or in the vicinity of 635 nm in the case of DVD-R). The radiated portion of the dye recording layer absorbs the light beam to locally raise the temperature. As a result, the physical or chemical change (for example, formation of pits) occurs to change the optical characteristic. Thus, the information is recorded on the medium.

On the other hand, information is usually read (reproduced) by radiating a laser beam having the same wavelength as that of the recording laser beam. The information is reproduced by detecting the difference in reflectance between the portion (recorded portion based on the formation of pits) at which the optical characteristic of the dye recording layer has been changed and the portion (non-recorded portion) at which the optical characteristic has not been changed.

When the heat mode-type optical information-recording medium, which is capable of recording and reproducing information by using the laser beam, is used, the tracking servo for the laser beam is performed on the basis of the push-pull signal.

The push-pull signal for the tracking servo has a substantially zero level when the laser beam makes scanning along one groove in a prescribed manner. When the laser beam is deviated toward the outer circumferential side or the inner circumferential side with respect to one groove, the push-pull signal has a level corresponding to an amount of the deviation. It is possible to know whether the laser beam is deviated toward the outer circumferential side or the inner circumferential side, depending on the polarity of the signal.

Therefore, it is possible to perform the tracking servo for the laser beam with respect to one track, as well as it is possible to make access to a desired tracking address, by monitoring the change in level of the push-pull signal.

In the case of the conventional optical information-recording medium, when the recording layer is formed on the substrate by using the organic dye, the dye solution is applied onto the substrate while rotating the substrate. Especially, the dye solution is applied while rotating the substrate at a constant number of revolutions regardless of the position on the substrate such as those on the outer circumferential side or the inner circumferential side thereof.

For this reason, the film thickness of the applied dye becomes thick on the inner circumferential side of the substrate, and hence, for example, the maximum level (level corresponding to the maximum deviation amount) of the push-pull signal for the tracking servo is decreased in some cases. Further, the level of the push-pull signal relevant to the radial direction of the substrate suffers large dispersion as well. In such a case, there is a high possibility that the tracking failure may be caused by the laser beam.

The maximum level of the push-pull signal is increased on the basis of the fact that the reflectance is too low. In such a situation, an inconvenience arises in that the amplitude of the reproduced signal is too small, and the reading error tends to occur.

In general, when the dye solution is applied to the disk-shaped substrate for constructing the optical disk, the air cleanliness in the application chamber of the application apparatus is important in order to form an application surface (dye recording layer) having a uniform film thickness on which no error occurs.

Concerning this point, an exemplary process has been hitherto suggested, in which the relative humidity is set to be not more than 30 % in the preservation environment ranging from the step of forming the dye recording layer to the step of forming the light-reflective layer on the dye recording layer (Japanese Laid-Open Patent Publication No. 6-150371).

JP 09-208995 discloses a method of cleaning an article in which the resistivity of the water is set to 0.5-5.0 MΩ.cm and the water is heated to 40-80°C before immersing the article in it.

JP 06-095051 describes a method of cleaning a substrate using a combination of jet washing, ultrasonic washing and dip washing while using water having a resistivity of not more than 15 MΩ.cm.

In the conventional technique, the following air-conditioning system based on a circulation system has been also adopted. That is, the inside of the application chamber is maintained, for example, at a level of not more than class 100 to avoid any invasion of floating dust from the outside of the application apparatus. However, in order to maintain a constant film thickness of the application surface, the following operation is simultaneously performed. That is, the air, which has been discharged from the inside of the application chamber, is once dehumidified, and then the moisture content, which is obtained by forming water vapor by using a heating plate or the like, is added to the air before the air is supplied to the application chamber.

However, in the conventional technique, when the dye recording layer is formed, the operation is performed in the low humidity environment in which the relative humidity is not more than 30 %. Therefore, it is feared that the static electricity tends to be generated, and there is some possibility that the dye cannot be applied uniformly over the entire substrate surface. Further, a lot of cost is required for the air-conditioning system which is arranged to obtain the low humidity. Such a situation is also feared to be disadvantageous when it is intended to reduce the production cost of the optical disk.

The present invention has been made taking the foregoing problems into consideration. An object of at least the preferred embodiments of the invention is to provide a method for producing an optical information-recording medium in which the dispersion in level of the push-pull signal in the radial direction can be decreased, the maximum level of the push-pull signal can be within a prescribed range, and it is possible to produce the optical information-recording medium having a high quality.

Another object of the preferred forms of the present invention is to provide an optical information-recording medium which is excellent in preservation performance and which makes it possible to more efficiently achieve the uniform film thickness of the dye application surface and the formation of the application surface (dye recording layer) free from occurrence of error, and a method for producing the same.

Still another object of the preferred embodiments of the present invention is to provide an air-conditioning system for producing an optical information-recording medium which makes it possible to more efficiently achieve the uniform film thickness of the application surface and the formation of the application surface (dye recording layer) free from occurrence of error, by improving a discharge line.

Still another object of the preferred embodiments of the present invention is to provide an air-conditioning system for producing an optical information-recording medium which makes it possible to highly accurately control the temperature and the humidity of the processing section for forming the application surface and which makes it possible to more efficiently achieve the uniform film thickness of the application surface and the formation of the application surface (dye recording layer) on which no error occurs.

Still another object of the preferred forms of the present invention is to provide an air-conditioning system for producing an optical information-recording medium which makes it possible to avoid any floating impurity in the atmosphere in the processing section for forming the application surface and prevent the application surface from contamination of the impurity and which makes it possible to more efficiently achieve the uniform film thickness of the application surface and the formation of the application surface (dye recording layer) on which no error occurs.

According to a first aspect of the present invention there is provided a method for producing an optical information-recording medium of a heat mode type comprising, on a substrate, a recording layer capable of recording information by being irradiated with a laser beam, said method being characterised in that it comprises the step of:
forming said recording layer on said substrate by using water having a specific resistance of not less than 0.15 MΩ to humidify a process atmosphere employed to form said recording layer and wherein a relative humidity in said process atmosphere is set to be 30% to 60%.

According to a second aspect of the present invention there is provided an air-conditioning system for producing an optical information-recording medium, comprising:
a dehumidifying means for processing and dehumidifying air to obtain primary air;
a humidifying means for processing and humidifying at least said primary air to obtain secondary air; and
an air feed means for supplying said secondary air to an equipment for producing said optical information-recording medium of a heat mode type comprising, on a substrate, a recording layer capable of recording information by being irradiated with a laser beam, characterised in that:
   water having a specific resistance of not less than 0.15 MΩ is used as a humidification source for said humidifying means.

A preferred embodiment of the invention will now be described in detail, by way of example only, with reference to the accompanying drawings in which:
FIG. 1 shows an arrangement illustrating an example of the production system according to an embodiment of the present invention;
FIG. 2 shows an arrangement illustrating a spin coat apparatus installed for the application equipment;
FIG. 3 shows a perspective view illustrating the spin coat apparatus installed for the application equipment;
FIG. 4 shows a plan view illustrating a nozzle of the spin coat apparatus;
FIG. 5 shows a side view illustrating an example of the nozzle of the spin coat apparatus;
FIG. 6 shows a magnified sectional view illustrating, with partial omission, another example of the nozzle of the spin coat apparatus;
FIG. 7 shows a plan view illustrating an air-conditioning system;
FIG. 8 shows a front view illustrating the air-conditioning system;
FIG. 9 shows a side view illustrating the air-conditioning system;
FIG. 10 shows an arrangement of a discharge apparatus of the air-conditioning system, together with a superordinate discharge line;
FIG. 11 shows a sectional view illustrating an arrangement of a buffer box installed for the discharge apparatus;
FIG. 12 shows a block diagram illustrating an arrangement of an air conditioner;
FIG. 13A shows a step illustrating a state in which a groove is formed on a substrate;
FIG. 13B shows a step illustrating a state in which a dye recording layer is formed on the substrate;
FIG. 13C shows a step illustrating a state in which a light-reflective layer is formed on the substrate;
FIG. 14A shows a step illustrating a state in which the edge portion of the substrate is washed;
FIG. 14B shows a step illustrating a state in which a protective layer is formed on the substrate;
FIG. 15 shows a block diagram depicting steps illustrating a processing procedure when the dye solution is applied to the substrate, in an example production system;
FIG. 16 shows an arrangement illustrating another example of the production system according to the embodiment of the present invention;
FIG. 17 shows a table illustrating the results obtained in a first illustrative experiment; and
FIG. 18 shows a table illustrating the results obtained in a second illustrative experiment.

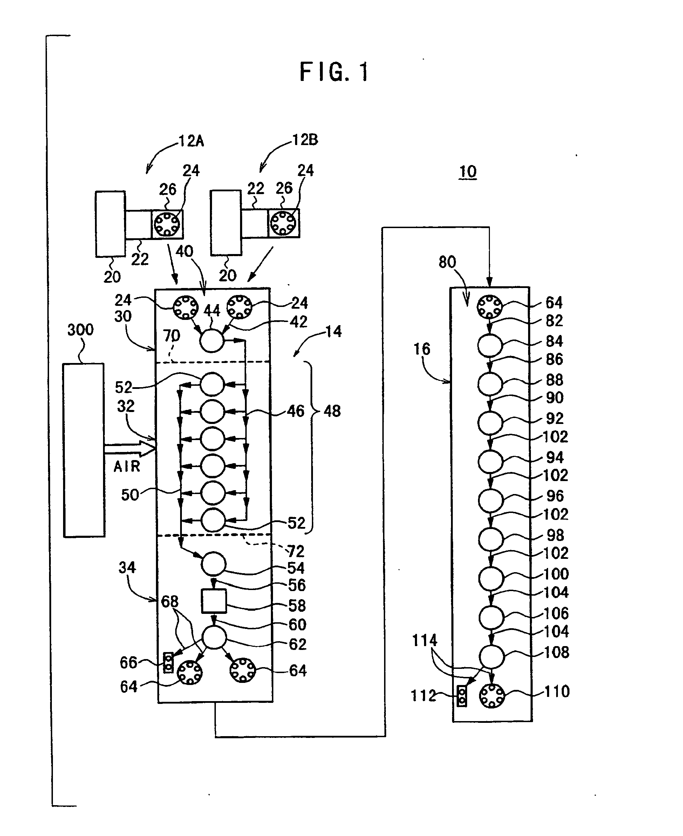

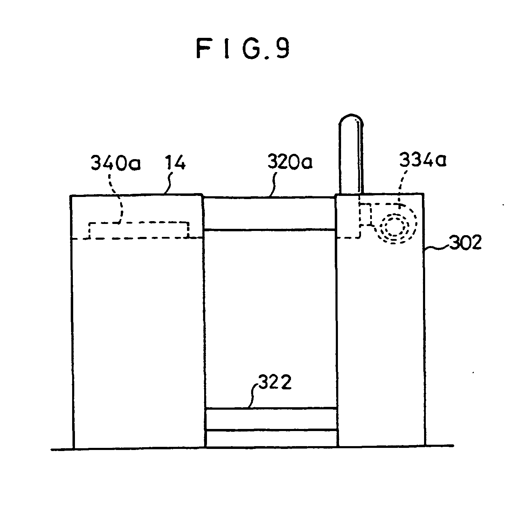

Explanation will be made below with reference to FIGS. 1 to 18 for an illustrative embodiment in which the optical information-recording medium and the method for producing the same according to the present invention are applied to a system for producing an optical disk such as CD-R (hereinafter simply referred to as "production system according to the embodiment"), and an illustrative embodiment in which the air-conditioning system for producing the optical information-recording medium according to the present invention is applied to a system for producing an optical disk such as CD-R as described above (hereinafter simply referred to as "air-conditioning system according to the embodiment").

As shown in FIG. 1, the production system 10 according to the embodiment of the present invention comprises two molding equipments (first and second molding equipments 12A, 12B) for manufacturing substrates by means of, for example, injection molding, compression molding, or injection compression molding, an application equipment 14 for applying a dye application solution onto a first principal surface of the substrate followed by drying to form a dye recording layer on the substrate, and an aftertreatment equipment 16 for forming a light-reflective layer on the dye recording layer on the substrate by means of, for example, sputtering followed by application of UV-curable solution on the light-reflective layer to perform UV irradiation thereafter so that a protective layer is formed on the light-reflective layer.

Each of the first and second molding equipments 12A, 12B includes a molding machine 20 for injection-molding, compression-molding, or injection compression-molding a resin material such as polycarbonate to manufacture the substrate formed with a tracking groove or convexity and concavity (groove) for representing information such as address signal on its first principal surface, a cooling unit 22 for cooling the substrate taken out of the molding machine 20, and an accumulating unit 26 (stack pole rotary table) installed with a plurality of stack poles 24 for stacking and storing the substrates after the cooling.

The application equipment 14 comprises three processing sections 30, 32, 34. The first processing section 30 includes a stack pole-accommodating unit 40 for accommodating the stack pole 24 transported from the first and second molding equipments 12A, 12B described above, a first transport mechanism 42 for extracting the substrate one by one from the stack pole 24 accommodated in the stack pole-accommodating unit 40 to transport the substrate to the next step, and an electrostatic blow mechanism 44 for removing the static electricity from one substrate transported by the first transport mechanism 42.

The second processing section 32 includes a second transport mechanism 46 for successively transporting, to the next step, the substrate completed for the electrostatic blow process performed by the first processing section 30, a dye application mechanism 48 for applying the dye solution to a plurality of substrates transported by the second transport mechanism 46 respectively, and a third transport mechanism 50 for transporting one by one, to the next step, the substrate completed for the dye application process. The dye application mechanism 48 comprises six spin coat apparatuses 52.

The third processing section 34 includes a back surface-washing mechanism 54 for washing the back surface of one substrate transported by the third transport mechanism 50, a fourth transport mechanism 56 for transporting, to the next step, the substrate completed for the back surface washing, a numbering mechanism 58 for marking, for example, a lot number on the substrate transported by the fourth transport mechanism 56, a fifth transport mechanism 60 for transporting, to the next step, the substrate completed for the marking of the lot number or the like, an inspection mechanism 62 for inspecting the substrate transported by the fifth transport mechanism 60 for the presence or absence of defect and for the film thickness of the dye recording layer, and a selection mechanism 68 for selecting the substrates into those to be stored on a stack pole 64 for normal products and those to be stored on a stack pole 66 for defective or "no good" products, henceforth referred to as NG products, depending on the result of inspection performed by the inspection mechanism 62.

A first partition plate 70 is installed between the first processing section 30 and the second processing section 32. Similarly, a second partition plate 72 is also installed between the second processing section 32 and the third processing section 34. An opening (not shown), which has a size of such a degree that the transport passage for the substrate effected by the second transport mechanism 46 is not closed, is formed at a lower portion of the first partition plate 70. An opening (not shown), which has a size of such a degree that the transport passage for the substrate effected by the third transport mechanism 50 is not closed, is formed at a lower portion of the second partition plate 72.

The aftertreatment equipment 16 includes a stack pole-accommodating unit 80 for accommodating the stack pole 64 for normal products transported from the application equipment 14, a sixth transport mechanism 82 for extracting the substrate one by one from the stack pole 64 accommodated in the stack pole-accommodating unit 80 to transport the substrate to the next step, a first electrostatic blow mechanism 84 for removing the static electricity from one substrate transported by the sixth transport mechanism 82, a seventh transport mechanism 86 for successively transporting, to the next step, the substrate completed for the electrostatic blow process, a sputtering mechanism 88 for forming, by sputtering, the light-reflective layer on the first principal surface of the substrate transported by the seventh transport mechanism 86, an eighth transport mechanism 90 for successively transporting, to the next step, the substrate completed for the sputtering of the light-reflective layer, and an edge-washing mechanism 92 for washing the circumferential edge (edge portion) of the substrate transported by the eighth transport mechanism 90.

The aftertreatment equipment 16 further includes a second electrostatic blow mechanism 94 for removing the static electricity from the substrate completed for the edge washing, a UV-curable solution application mechanism 96 for applying the UV-curable solution to the first principal surface of the substrate completed for the static blow process, a spin mechanism 98 for obtaining a uniform application thickness of the UV-curable solution on the substrate by rotating, at a high speed, the substrate completed for the application of the UV-curable solution, a UV radiation mechanism 100 for radiating ultraviolet light onto the substrate completed for the application of the UV-curable solution and the spin process to cure the UV-curable solution so that the protective layer is formed on the first principal surface of the substrate, a ninth transport mechanism 102 for transporting the substrate to the second electrostatic blow mechanism 94, the UV-curable solution application mechanism 96, the spin mechanism 98, and the UV radiation mechanism 100 respectively, a tenth transport mechanism 104 for transporting the UV-radiated substrate to the next step, a defect inspection mechanism 106 for inspecting the substrate transported by the tenth transport mechanism 104 for the defect on the application surface and the protective layer surface, a characteristic inspection mechanism 108 for inspecting the signal characteristic based on the groove formed on the substrate, and a selection mechanism 114 for selecting the substrate into those to be stored on a stack pole 110 for normal products and those to be stored on a stack pole 112 for NG products, depending on the result of inspection performed by the defect inspection mechanism 106 and the characteristic inspection mechanism 108.

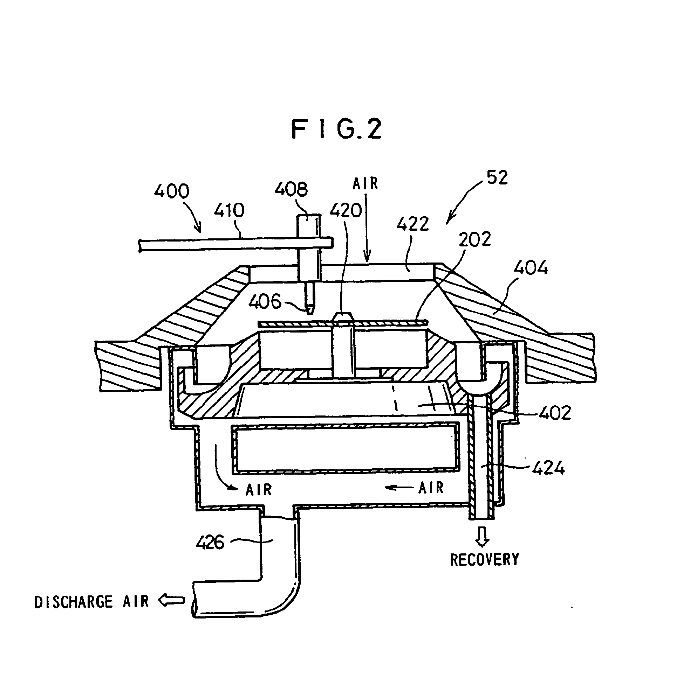

The arrangement of one of the spin coat apparatuses 52 will now be explained with reference to FIGS. 2 to 6.

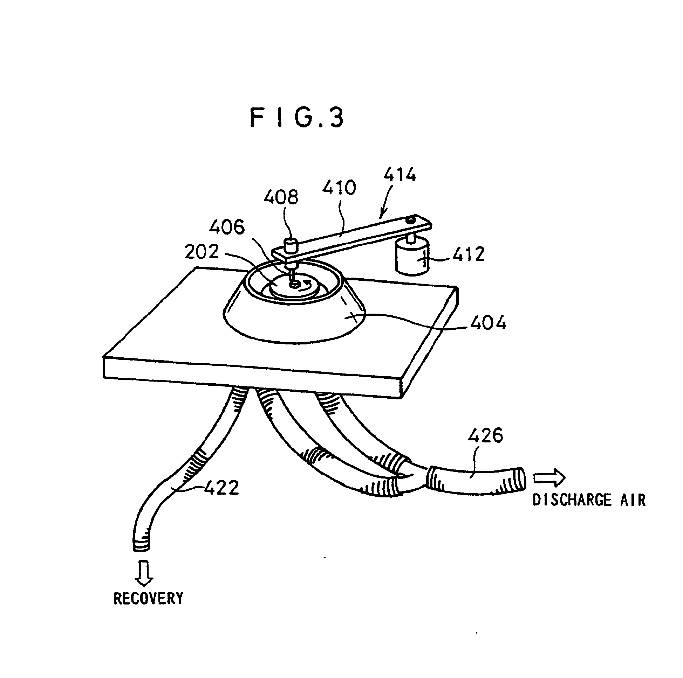

As shown in FIGS. 2 and 3, the spin coat apparatus 52 comprises a dye solution supply unit 400, a spinner head unit 402, and a scattering-preventive wall 404. The dye solution supply unit 400 includes a pressurizing tank (not shown) charged with the dye solution, a pipe (not shown) drawn from the pressurizing tank to a nozzle 406, and a discharge amount-adjusting valve 408 for adjusting the amount of the dye solution discharged from the nozzle 406. A predetermined amount of the dye solution is applied dropwise onto the surface of the substrate 202 through the nozzle 406.

The dye solution supply unit 400 is arranged to be capable of making swinging movement from a waiting position to a position over the substrate 202 by the aid of a handling mechanism 414 comprising a support plate 410 for supporting the nozzle 406 while being directed downwardly, and a motor 412 for horizontally swinging the support plate 410.

The spinner head unit 402 is arranged at a position under the dye solution supply unit 400, so that the substrate 202 is held horizontally by the aid of a detachable fixing member 420, making it possible to perform rotation about the axis by the aid of a driving motor (not shown).

The dye solution is dripped dropwise from the nozzle 406 of the dye solution supply unit 400 onto the substrate 202 rotating in a state of being horizontally held by the spinner head unit 402, and it flows and expands toward the outer circumferential side on the surface of the substrate 202. The excessive dye solution is spun out from the outer circumferential edge of the substrate 202, and it is released to the outside. Subsequently, the applied film is dried. Thus, the applied film (dye recording layer 204) is formed on the surface of the substrate 202.

The scattering-preventive wall 404 is provided in order that the excessive dye solution, which is released to the outside from the outer circumferential edge of the substrate 202, is prevented from scattering to the surroundings. The scattering-preventive wall 404 is arranged around the spinner head unit 402 so that an opening 422 is formed at its upper portion. The excessive dye solution, which is gathered by the aid of the scattering-preventive wall 404, is recovered through a drain 424.

The air is locally discharged as follows for the respective spin coat apparatuses 52 of the second processing section 32 (see FIG. 1). That is, the air, which is introduced through the opening 422 formed at the upper portion of the scattering-preventive wall 404, is allowed to flow over the surface of the substrate 202, and then the air is discharged via a discharge tube 426 attached to a lower portion of each of the spinner head units 402.

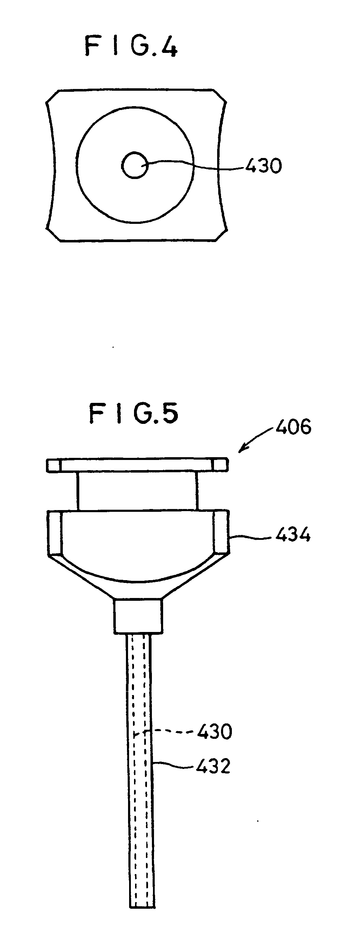

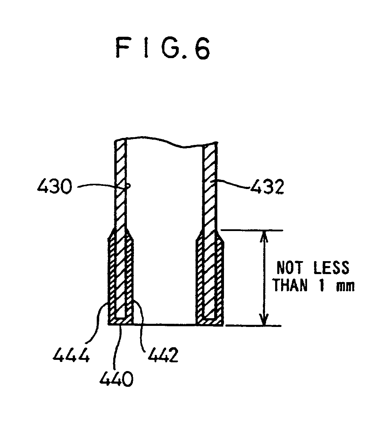

As shown in FIGS. 4 and 5, the nozzle 406 of the dye solution supply unit 400 includes a slender main nozzle body 432 having a cylindrical configuration having a through-hole 430 formed in the axial direction, and an attachment portion 434 for fixing the main nozzle body 432 to the support plate 410 (see FIG. 3). The main nozzle body 432 has its surface in which the forward end surface and one of or both of inner and outer wall surfaces extending over a range of not less than 1 mm from the forward end surface are composed of fluorine compound. Those usable as the fluorine compound include, for example, polytetrafluoroethylene and polytetrafluoroethylene-containing substance.

Examples of the nozzle 406 preferably used in this embodiment include, for example, the nozzle 406 in which the forward end surface of the main nozzle body 432 and the range of not less than 1 mm from the forward end surface are formed with the fluorine compound as shown in FIG. 5, and a nozzle 406 in which the forward end surface 440 of the main nozzle body 432 and one of or both of outer and inner wall surfaces 442, 444 extending over the range of not less than 1 mm from the forward end surface 440 are coated with the fluorine compound as shown in FIG. 6.

When the forward end surface of the main nozzle body 432 and the range of not less than 1 mm from the forward end surface are formed with the fluorine compound, the following structure is preferably used in a practical viewpoint considering, for example, the strength. For example, the main nozzle body 432 is made of stainless steel, and the forward end surface and the range within 5 mm at maximum from the forward end surface are made of the fluorine compound.

When the forward end surface 440 of the main nozzle body 432 and one of or both of the outer and inner wall surfaces 442, 444 extending over the range of not less than 1 mm from the forward end surface 440 are coated with the fluorine compound as shown in FIG. 6, the following structure is preferably used. That is, the region of not less than 10 mm from the forward end surface 440 of the main nozzle body 432 is coated with the fluorine compound. More preferably, the entire region of the main nozzle body 432 is coated with the fluorine compound. When the coating is applied, the thickness thereof is not specifically limited. However, the thickness is appropriately within a range of 5 to 500 µm. Stainless steel is preferably used as the material for the main nozzle body 432 as described above. The diameter of the through-hole 430 formed through the main nozzle body 432 is generally within a range of 0.5 to 1.0 mm.

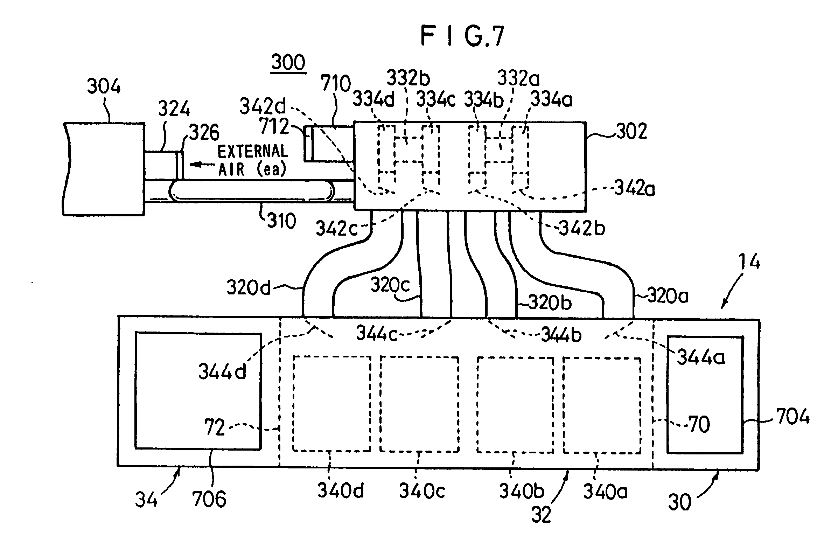

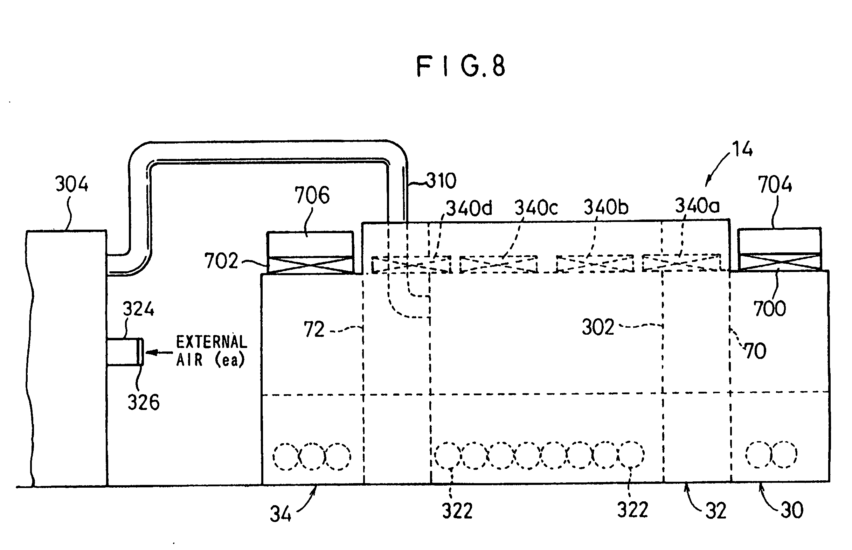

The production system 10 according to the embodiment of the present invention is further installed with an air-conditioning system 300 according to the embodiment of the present invention in juxtaposition with the second processing section 32 of the application equipment 14 as shown in FIG. 1. Further, as shown in FIGS. 7 and 8, air conditioners 704, 706 are installed at the respective ceilings of the first processing section 30 and the third processing section 34 via high performance packed bed filters (HEPA filters) 700, 702 respectively.

The air conditioners 704, 706 feed clean air to the first and third processing sections 30, 34 respectively. Thus, it is possible to control the temperature in the first and third processing sections 30, 34.

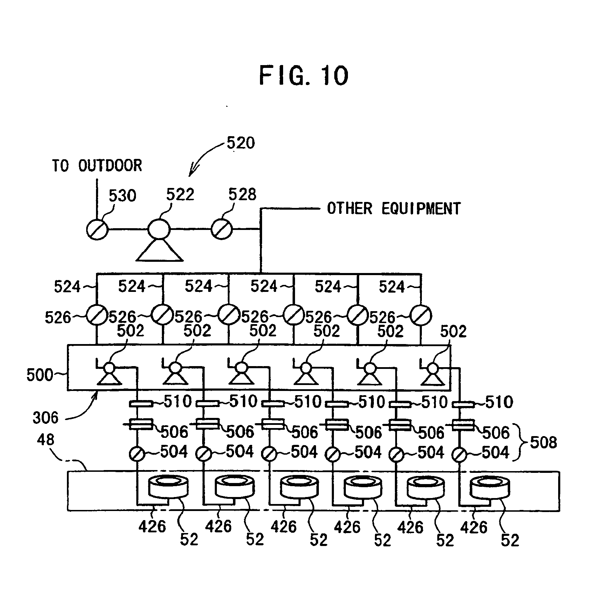

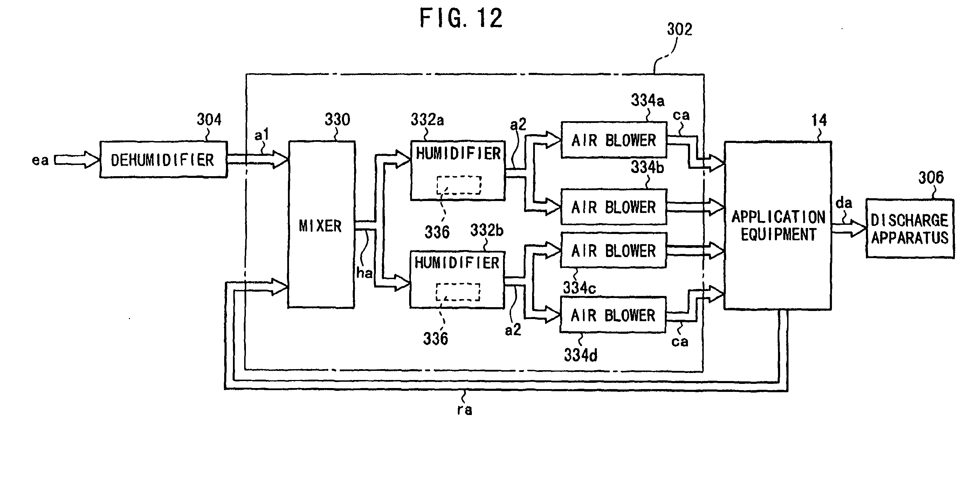

As shown in FIGS. 7 and 12, the air-conditioning system 300 according to the embodiment of the present invention comprises an air conditioner 302 for feeding the clean air "ca" to the application equipment 14, a dehumidifier 304 for introducing the external air "ea" to perform dehumidification and outputting the air as the primary air "a1", and a discharge apparatus 306 (see FIG. 10) for feeding a part of discharge air (local discharge air) "da" from the application equipment 14 to the superordinate discharge line. The local discharge air "da" includes, for example, the discharge air from the six spin coat apparatuses 52 of the dye application mechanism 48 of the application equipment 14.

As shown in FIGS. 7 and 8, the air-conditioning system 300 according to the embodiment of the present invention comprises a duct 310 which is provided between the dehumidifier 304 and the air conditioner 302, for feeding the primary air "a1" outputted from the dehumidifier 304 to the air conditioner 302. As shown in FIG. 10, the discharge tubes 426 described above are provided between the discharge apparatus 306 and the respective discharge sides of the six spin coat apparatuses 52 of the dye application mechanism 48 of the application equipment 14.

A plurality of air supply ducts 320a to 320d (four individuals in the illustrated embodiment) for supplying the clean air "ca" outputted from the air conditioner 302 to the application equipment 14, and a plurality of return ducts 322 (eight individuals in the illustrated embodiment) for returning the discharge air "ra" other than the local discharge air "da" from the application equipment 14 to the air conditioner 302 are installed between the air conditioner 302 and the application equipment 14.

The air conditioner 302 is installed with an inlet port 710 for introducing the external air "ea", and a prefilter 712 is attached to the inlet port 710. In the case of the ordinary air-conditioning control (not in the case of the low humidity control), the air, which is introduced from the inlet port 710, is supplied as the primary air to the air conditioner 302.

The dehumidifier 304 is used when the low humidity control is performed. As shown in FIGS. 7 and 8, the dehumidifier 304 is installed with an inlet port 324 for introducing the external air "ea". A prefilter 326 is attached to the inlet port 324. Therefore, the external air "ea", which is introduced through the inlet port 324, is introduced into the inside of the dehumidifier 304 after removing the dust and dirt by using the prefilter 326. The dehumidifying process is effected in the dehumidifier 304. The dehumidified external air is supplied as the primary air to the air conditioner 302 disposed at the downstream stage.

As shown in FIG. 12, the air conditioner 302 comprises a mixer 330 for mixing the primary air "a1" from the dehumidifier 304 or an inlet port 610 and the discharge air (discharge air other than the local discharge air) "ra" from the application equipment 14 to output the air as the mixed air "ha", two humidifiers 332a, 332b for applying the humidifying treatment to the mixed air "ha" outputted from the mixer 330 to output the air as the secondary air "a2", and four air blowers 334a to 334d for supplying the secondary air "a2" from the two humidifiers 332a, 332b to the application equipment 14.

Each of the humidifiers 332a, 332b includes, at its inside, a heating plate 336 for adding vaporized moisture to the primary air "a1". The heating plate 336 is charged with pure water. In the present invention, the pure water having a specific resistance of not less than 0.15 MΩ (room temperature) is appropriately used. It is possible to use the pure water preferably having a specific resistance of not less than 1.5 MΩ (room temperature), and more preferably having a specific resistance of not less than 15 MΩ (room temperature). In this embodiment, the pure water having a specific resistance of 2 MΩ is used.

The method for obtaining the pure water includes, for example, a method based on the use of distillation and a method based on the use of ion exchange resin. However, for example, in view of the efficiency to remove the impurity, it is preferable to use the method based on the use of ion exchange resin.

On the other hand, as shown in FIGS. 7 and 8, four high performance packed bed filters (HEPA filters) 340a to 340d are installed at upper portions of the application equipment 14, of the air supply passage to the application equipment. Directional control plates 342a to 342d are installed between the four air blowers 334a to 334d and the four air supply ducts 320a to 320d corresponding to one another respectively. The directional control plates 342a to 342d are arranged as follows. That is, with reference to FIG. 7, the first directional control plate 342a, which corresponds to the first air blower 334a located at the most rightward position, is installed in an inclined direction so that the amount of air supplied to the second processing section 32 (see FIG. 1) via the second air supply duct 320b is larger than the amount of air supplied to the first processing section 30. With reference to FIG. 7, the fourth directional control plate 342d, which corresponds to the fourth air blower 334d located at the most leftward position, is installed in an inclined direction so that the amount of air supplied to the second processing section 32 via the third air supply duct 320c is larger than the amount of air supplied to the third processing section 34.

The second directional control plate 342b, which corresponds to the second air blower 334b, is installed in an inclined direction so that the amount of air supplied to the second processing section 32 via the third air supply duct 320c is larger than the amount of air supplied to the second processing section 32 via the second air supply duct 320b. The third directional control plate 342c, which corresponds to the third air blower 334c, is installed in an inclined direction so that the amount of air supplied to the second processing section 32 via the second air supply duct 320b is larger than the amount of air supplied to the second processing section 32 via the third air supply duct 320c.

That is, the directions of the first to fourth directional control plates 342a to 342d are set so that the amount of air supplied to the second processing section 32 via the second and third air supply ducts 320b, 320c is larger than the amount of air supplied to the first processing section 30 via the first air supply duct 320a and the amount of air supplied to the third processing section 34 via the fourth air supply duct 320d.

Directional control plates 344a to 344d are also installed at upper portions of the application equipment 14 between the four air supply ducts 320a to 320d and HEPA filters 340a to 340d corresponding to one another respectively. The directional control plates 344a to 344d are arranged as follows. That is, with reference to FIG. 7, the first directional control plate 344a, which corresponds to the first HEPA filter 340a located at the most rightward position, is installed obliquely so that the clean air "ca" supplied via the first air supply duct 320a is directed toward the second processing section 32. With reference to FIG. 7, the fourth directional control plate 344d, which corresponds to the fourth HEPA filter 340d located at the most leftward position, is installed obliquely so that the clean air "ca" supplied via the fourth air supply duct 320d is directed toward the second processing section 32.

The second directional control plate 344b, which corresponds to the second HEPA filter 340b, is installed obliquely in a direction to suppress the entire supply of the clean air "ca" supplied via the second air supply duct 320b to the second processing section 32. The third directional control plate 344c, which corresponds to the third HEPA filter 340c, is installed obliquely in a direction to suppress the entire supply of the clean air "ca" supplied via the third air supply duct 320c to the second processing section 32.

The amount of air supplied to the second processing section 32 disposed at the center of the application equipment 14 is larger than the amount of air supplied to the first and third processing sections 30, 34 disposed therearound, owing to the directions of the four directional control plates 342a to 342d disposed on the side of the air conditioner 302 and the directions of the four directional control plates 344a to 344d disposed on the side of the application equipment 14. Accordingly, the pressure in the atmosphere in the second processing section 32 is higher than the pressures in the respective atmospheres in the first and third processing sections 30, 34.

That is, the provision of the plurality of directional control plates on the air supply passage as described above makes it possible to uniformly mix the moisture in the air humidified by the air conditioner 302 and mitigate the dispersion in humidity in the respective spin coat apparatuses 52 disposed in the second processing section 32. Further, it is possible to eliminate the difference in wind speed between the respective spin coat apparatuses 52, concerning the wind speed in the downward direction in the respective spin coat apparatuses 52.

Further, as shown in FIG. 1, the first partition plate 70 is provided between the first and second processing sections 30, 32, and the second partition plate 72 is provided between the second and third processing sections 32, 34. Therefore, it is possible to avoid the inflow of air from the first processing section 30 to the second processing section 32 and the inflow of air from the third processing section 34 to the second processing section 32. Thus, it is possible to maintain the state in which the pressure in the atmosphere in the second processing section 32 is higher than the pressures in the respective atmospheres in the first and third processing sections 30, 34.

That is, the four directional control plates 342a to 342d disposed on the side of the air conditioner 302, the four directional control plates 344a to 344d disposed on the side of the application equipment 14, and the first and second partition plates 70, 72 function as the air feed amount control means to give the state in which the pressure in the atmosphere in the second processing section 32 is higher than the pressures in the respective atmospheres in the first and third processing sections 30, 34.

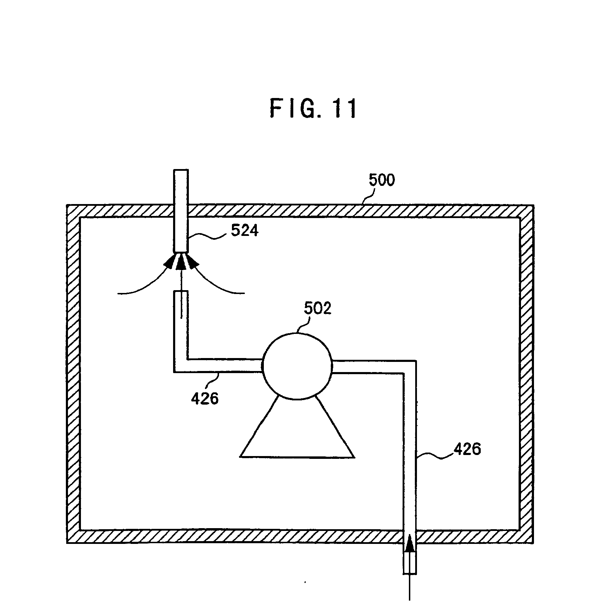

Next, as shown in FIGS. 10 and 11, the discharge apparatus 306 includes a buffer box 500 which has its outer housing formed to have a substantially rectangular parallelepiped-shaped configuration and which has its air-tight inside. Six discharge blowers 502, which correspond to the six spin coat apparatuses 52 of the application equipment 14 respectively, are provided in the buffer box 500.

A discharge amount control valve mechanism 508 constructed, for example, by a butterfly valve 504 and a shutter 506, and a discharge amount sensor 510 for electrically detecting the discharge amount are installed between each of the six spin coat apparatuses 52 and the discharge blowers 502 corresponding thereto. The drying condition for the applied film can be appropriately changed by adjusting the discharge amount.

A superordinate discharge line 520 is connected at the downstream stage of the buffer box 500. As shown in FIG. 10, the superordinate discharge line 520 performs the air discharge for the application equipment 14 as well as the air discharge for the molding equipment, the aftertreatment equipment, and other various production equipments, by the aid of an outdoor blower 522 installed at the outdoor.

Six discharge tubes 524 of a large number of discharge tubes of the superordinate discharge line 520, which are allotted to the application equipment, are connected to the buffer box 500 respectively. In this embodiment, as shown in FIG. 11, the six discharge tubes 524, which extend from the superordinate discharge line 520 to the application equipment 14, are separated in the buffer box 500 from the six discharge tubes 426 led from the discharge blowers 502 respectively. The butterfly valve 526 is installed for each of the six discharge tubes 520 extending from the superordinate discharge line 520 to the application equipment 14, making it possible to adjust the discharge amount to the superordinate discharge line 520. Butterfly valves 528, 530 are installed at the upstream and downstream stages of the outdoor blower 522 respectively, making it possible to adjust the discharge amount to the outdoor.

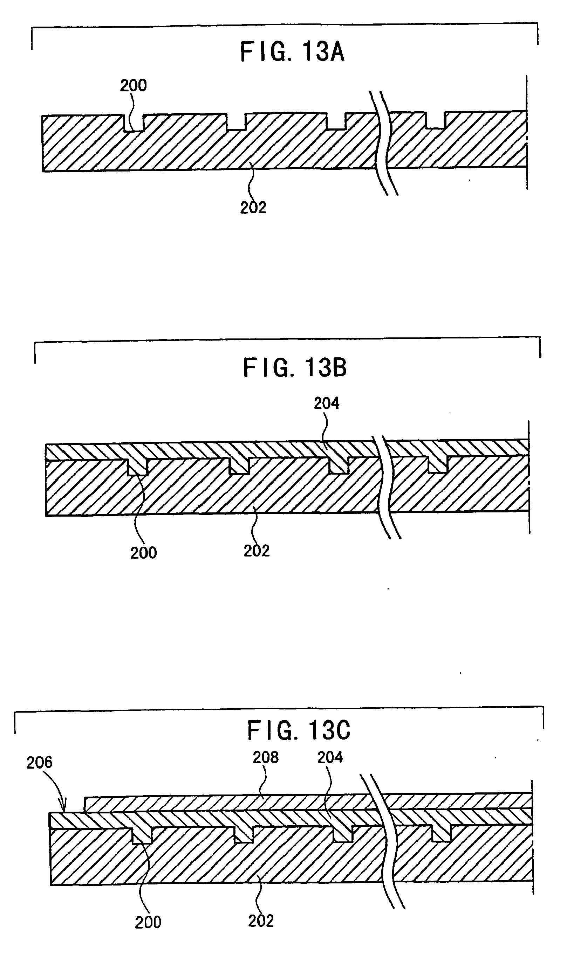

Next, explanation will be made for the process for producing the optical disk by using the production system 10 according to the embodiment of the present invention with reference to the drawings depicting the process steps shown in FIG. 13A to FIG. 14B as well.

At first, a resin material such as polycarbonate is subjected to injection molding, compression molding, or injection compression molding by using the molding machines 20 disposed in the first and second molding equipments 12A, 12B to produce the substrate 202 formed, on the first principal surface, with the tracking groove or the convexity and concavity (groove) 200 representing the information such as the address signal as shown in FIG. 13A.

The material for the substrate 202 includes, for example, polycarbonate, acrylic resin such as polymethyl methacrylate, vinyl chloride-based resin such as polyvinyl chloride and vinyl chloride copolymer, epoxy resin, amorphous polyolefine, and polyester. These compounds may be used in combination, if desired. Among the materials described above, polycarbonate is preferred, in view of, for example, the humidity resistance, the dimensional stability, and the price. The depth of the groove is preferably within a range of 0.01 to 0.3 µm. The half value width thereof is preferably within a range of 0.2 to 0.9 µm.

The substrate 202, which is taken out of the molding machine 20, is cooled in the cooling unit 22 disposed at the downstream stage. After that, the substrate 202 is stacked on the stack pole 24 with its first principal surface disposed downwardly. At the stage at which a predetermined number of substrates 202 are stacked on the stack pole 24, the stack pole 24 is taken out of the molding equipment 12A, 12B, and it is transported to the application equipment 14 disposed at the next stage. The stack pole 24 is accommodated in the stack pole-accommodating unit 40 of the application equipment 14. The transport may be performed by using a carriage, or by using a self-propelled automatic transport apparatus.

At the stage at which the stack pole 24 is accommodated in the stack pole-accommodating unit 40, the first transport mechanism 42 is operated to take out the substrate one by one from the stack pole 24 so that the substrate 202 is transported to the electrostatic blow mechanism 44 disposed at the downstream stage. The static electricity is removed by the electrostatic blow mechanism 44 from the substrate 202 which has been transported to the electrostatic blow mechanism 44. After that, the substrate 202 is transported to the dye application mechanism 48 disposed at the next stage, by the aid of the second transport mechanism 46, and it is introduced into any one of the six spin coat apparatuses 52. The dye solution is applied onto the first principal surface of the substrate 202 which has been introduced into the spin coat apparatus 52, followed by being rotated at a high speed to obtain a uniform thickness of the dye solution. Subsequently, the drying treatment is applied thereto. Accordingly, as shown in FIG. 13B, the dye recording layer 204 is formed on the first principal surface of the substrate 202.

That is, the substrate 202, which has been introduced into the spin coat apparatus 52, is installed to the spinner head unit 402 shown in FIG. 2, and it is held horizontally by the aid of the fixing member 420. Subsequently, the dye solution, which is supplied from the pressurising tank, is adjusted to give a predetermined amount by the aid of the discharge amount-adjusting valve 408. The dye solution is applied dropwise via the nozzle 406 onto the inner circumferential side of the substrate 202.

As described above, the forward end surface of the nozzle 406 and one of or both of the outer and inner wall surfaces in the range of not less than 1 mm from the forward end surface are the surface composed of the fluorine compound. Accordingly, the application solution scarcely adheres to these surfaces. Further, deposition or sedimentation of the dye to these surfaces hardly occurs, which would otherwise occur due to the drying of adhered application solution. Therefore, the applied film can be smoothly formed without interference in application from application solution adhered, deposited or sedimented on or to the above-mentioned surfaces of the nozzle 406.

A dye solution, which is obtained by dissolving the dye in an appropriate solvent, is used as the dye solution. The concentration of the dye in the dye solution is generally within a range of 0.01 to 15% by weight, preferably within a range of 0.1 to 10% by weight, especially preferably within a range of 0.5 to 5% by weight, and most preferably within a range of 0.5 to 3 % by weight.

The spinner head unit is capable of performing high speed rotation by the aid of the driving motor. The dye solution, which has been dripped onto the substrate 202, flows and expands in the direction toward the outer circumference on the surface of the substrate 202 in accordance with the rotation of the spinner head unit 402. The dye solution arrives at the outer circumferential edge of the substrate 202 while forming the applied film.

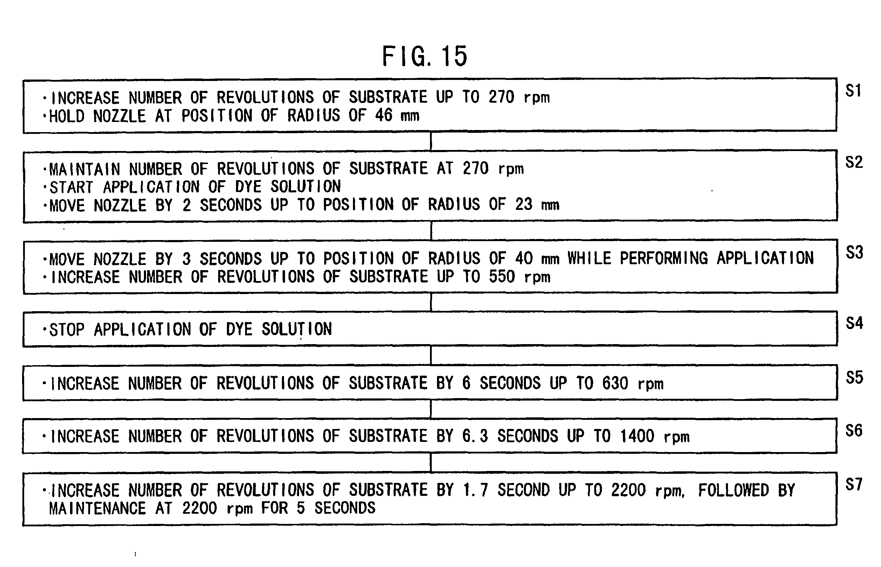

An example of how the dye solution can be applied onto the substrate 202 will now be illustrated by FIG. 15.

At first, in the step S1 shown in FIG. 15, the number of revolutions of the substrate 202 is increased up to about 270 rpm, simultaneously with which the support plate 410 of the dye solution supply unit 400 (see FIG. 3) is rotated in the horizontal direction to move the nozzle 406 up to a position corresponding to a radius of the substrate 202 of 46 mm.

After that, in the step S2, the application of the dye solution is started while maintaining the number of revolutions of the substrate 202 at 270 rpm. In this state, the support plate 410 is rotated in the horizontal direction to move the nozzle 406 by about 2 seconds up to a position of radius of 23 mm.

Subsequently, in the step S3, the application of the dye solution is performed, while the support plate 410 is rotated in the horizontal direction to move the nozzle 406 by about 3 seconds up to a position of radius of 40 mm, simultaneously with which the number of revolutions of the substrate 202 is increased up to 550 rpm.

After that, in the step S4, the application of the dye solution is stopped, and the support plate 410 is rotated in the horizontal direction to restore the nozzle 406 to the original position (initial state).

Subsequently, in the step S5, the number of revolutions of the substrate 202 is increased by 6 seconds up to 630 rpm.

After that, in the step S6, the number of revolutions of the substrate 202 is increased by 6.3 seconds up to 1400 rpm.

In the step S7, the number of revolutions of the substrate 202 is increased by 1.7 second up to 2200 rpm, and then the number of revolutions of the substrate 202 (= 2200 rpm) is maintained for 5 seconds.

The excessive dye solution, which arrives at the outer circumferential edge of the substrate 202 in accordance with the increase in number of revolutions in the steps S5 to S7, is spun out by the centrifugal force, and it is scattered to the surroundings of the edge of the substrate 202. As shown in FIGS. 2 and 3, the scattered excessive dye solution collides with the scattering-preventive wall 404, and it is gathered in the receiving tray provided thereunder, followed by being recovered by the aid of the drain 424. The drying process for the applied film is performed during the formation process thereof and after the formation of the applied film. The thickness of the applied film (dye recording layer) is generally set to be within a range of 20 to 500 nm, and preferably within a range of 50 to 300 nm.

In the dye application process performed in the steps S1 to S7 described above, the wind speed of the clean air fed to the application equipment 14 is set to be not more than about 0.4 m/sec in the air-conditioning system 300. That is, the air-conditioning wind speed with respect to the dye application surface of the substrate 202 is set to be not more than about 0.4 m/sec.

At the stage at which the process in the step S7 is completed, the rotation of the substrate 202 is stopped to complete the application treatment of the dye solution to the substrate 202.

It is noted that the dye to be used for the dye recording layer 204 is not specifically limited. Those usable as the dye include, for example, cyanine-based dye, phthalocyanine-based dye, imidazoquinoxaline-based dye, pyrylium-based dye, thiopyrylium-based dye, azulenium-based dye, squalirium-based dye, metal complex-based dye such as those containing Ni and Cr, naphthoquinone-based dye, anthraquinone-based dye, indophenol-based dye, indoaniline-based dye, triphenylmethane-based dye, merocyanine-based dye, oxonol-based dye, aminium-based dye, diimmonium-based dye, and nitroso compound. Of the dyes described above, those preferably used are cyanine-based dye, phthalocyanine-based dye, azulenium-based dye, squalirium-based dye, oxonol-based dye, and imidazoquinoxaline-based dye.

Those usable as the solvent for the dye solution for forming the dye recording layer 204 include, for example, ester such as butyl acetate and cellosolve acetate; ketone such as methyl ethyl ketone, cyclohexanone, and methyl isobutyl ketone; chlorinated hydrocarbon such as dichloromethane, 1,2-dichloroethane, and chloroform; amide such as dimethylformamide; hydrocarbon such as cyclohexane; ether such as tetrahydrofuran, ethyl ether, and dioxane; alcohol such as ethanol, n-propanol, isopropanol, n-butanol, and diacetone alcohol; fluorine-based solvent such as 2,2,3,3-tetrafluoro-1-propanol; and glycol ether such as ethylene glycol monomethyl ether, ethylene glycol monoethyl ether, and propylene glycol monomethyl ether.

The solvent can be appropriately used singly or in combination of two or more species in view of the solubility of the dye to be used. Preferably, the fluorine-based solvent such as 2,2,3,3-tetrafluoro-1-propanol is used. If desired, a fading-preventive agent and a binder may be added to the dye solution. Further, it is allowable to add various additives such as an antioxidant, a UV-absorbing agent, a plasticizer, and a lubricant, depending on the purpose.

Representative examples of the fading-preventive agent include nitroso compound, metal complex, diimmonium salt, and aluminum salt. Examples of them are described, for example, in Japanese Laid-Open Patent Publication Nos. 2-300288, 3-224793, and 4-146189.

Examples of the binder include natural organic high-molecular substances such as gelatin, cellulose derivatives, dextran, rosin, and rubber; and synthetic organic high-molecular substances including, for example, hydrocarbon-based resin such as polyethylene, polypropylene, polystyrene, and polyisobutylene, vinyl-based resin such as polyvinyl chloride, polyvinylidene chloride, and polyvinyl chloride/polyvinyl acetate copolymer, acrylic resin such as polymethyl acrylate and polymethyl methacrylate, initial condensate of thermosetting resin such as polyvinyl alcohol, chlorinated polyethylene, epoxy resin, butylal resin, rubber derivatives, and phenol-formaldehyde resin.

When the binder is used, the amount of use of the binder is generally not more than 20 parts by weight, preferably not more than 10 parts by weight, and more preferably not more than 5 parts by weight with respect to 100 parts by weight of the dye.

An undercoat layer may be provided on the surface of the substrate 202 on the side on which the dye recording layer 204 is formed, for example, for the purpose of the improvement in flatness, the improvement in adhesive powder, and the prevention from deterioration in quality of the dye recording layer 204.

Those usable as the material for the undercoat layer include, for example, high-molecular substance such as polymethyl methacrylate, acrylic acid/methacrylic acid copolymer, styrene/maleic anhydride copolymer, polyvinyl alcohol, N-methylol acrylamide, styrene/vinyl toluene copolymer, chlorosulfonated polyethylene, nitrocellulose, polyvinyl chloride, chlorinated polyolefine, polyester, polyimide, vinyl acetate/vinyl chloride copolymer, ethylene/vinyl acetate copolymer, polyethylene, polypropylene, and polycarbonate; and surface modifier such as silane coupling agent.

The undercoat layer can be formed by dissolving or dispersing the substance described above in an appropriate solvent to prepare a dye solution, and then applying the obtained application solution to the substrate surface by using an application method such as spin coat, dip coat, and extrusion coat. The layer thickness of the undercoat layer is generally set to be within a range of 0.005 to 20 µm, and preferably 0.01 to 10 µm.

The substrate 202, on which the dye recording layer 204 has been formed, is transported to the back surface-washing mechanism 54 disposed at the next stage, by the aid of the third transport mechanism 50. The surface (back surface) on the side opposite to the first principal surface of the substrate 202 is washed. After that, the substrate 202 is transported to the numbering mechanism 58 disposed at the next stage, by the aid of the fourth transport mechanism 56. The lot number or the like is marked on the first principal surface or the back surface of the substrate 202.

After that, the substrate 202 is transported to the inspection mechanism 62 disposed at the next stage, by the aid of the fifth transport mechanism 60. The substrate 202 is inspected for the presence or absence of defect and for the film thickness of the dye recording layer 204. The inspection is performed by radiating the light onto the back surface of the substrate 202 so that the image processing is performed for the transmission state of the light by using, for example, a CCD camera. The inspection result obtained by the inspection mechanism 62 is fed to the selection mechanism 68 disposed at the next stage.

The substrate 202, which has been completed for the inspection process described above, is transported and selected into those to be stacked on the stack pole 64 for normal products or those to be stacked on the stack pole 66 for NG products, on the basis of the inspection result by the aid of the selection mechanism 68.

At the stage at which a predetermined number of substrates 202 are stacked on the stack pole 64 for normal products, the stack pole 64 for normal products is taken out of the application equipment 14, and it is transported to the aftertreatment equipment 16 disposed at the next stage. The stack pole 64 is accommodated in the stack pole-accommodating unit 80 of the aftertreatment equipment 16. The transport may be performed by using a carriage, or by using a self-propelled automatic transport apparatus.

At the stage at which the stack pole 64 for normal products is accommodated in the stack pole-accommodating unit 80, the sixth transport mechanism 82 is operated to take out the substrate 202 one by one from the stack pole 64 so that the substrate 202 is transported to the first electrostatic blow mechanism 84 disposed at the next stage. The static electricity is removed by the first electrostatic blow mechanism 84 from the substrate 202 which has been transported to the first electrostatic blow mechanism 84. Subsequently, the substrate 202 is transported by the seventh transport mechanism 86 to the sputtering mechanism 88 disposed at the next stage.

After the substrate 202 is introduced into the sputtering mechanism 88, as shown in FIG. 13C, the light-reflective layer 208 is formed by sputtering on the entire first principal surface thereof except for the circumferential edge portion (edge portion) 206.

The light-reflective substance, which is the material for the light-reflective layer 208, is a substance having a high reflectance with respect to the laser beam. Those usable as the light-reflective substance include, for example, stainless steel or metalloid and metal such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, and Bi.

Among them, those preferably used are Cr, Ni, Pt, Cu, Ag, Au, Al, and stainless steel. The substance may be used singly or in combination of two or more species. Alternatively, the substance may be used as an alloy. Especially preferably used is Ag or an alloy thereof.

The light-reflective layer 208 can be formed on the recording layer, for example, by means of vapor deposition, sputtering, or ion plating of the light-reflective substance. The layer thickness of the reflective layer is generally set to be within a range of 10 to 800 nm, preferably within a range of 20 to 500 nm, and more preferably within a range of 50 to 300 nm.

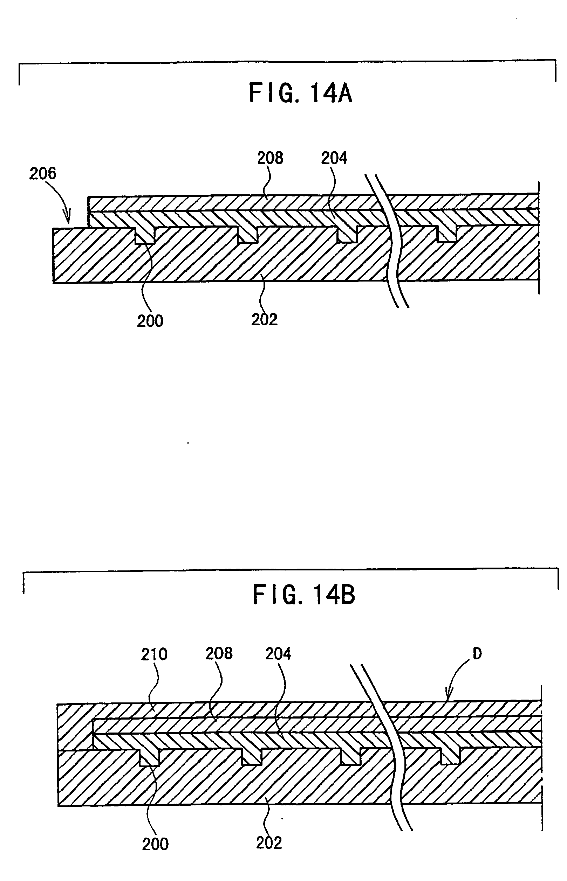

The substrate 202, on which the light-reflective layer 208 has been formed, is transported by the eighth transport mechanism 90 to the edge-washing mechanism 92 disposed at the next stage. As shown in FIG. 14A, the edge portion 206 of the first principal surface of the substrate 202 is washed to remove the dye recording layer 204 having been formed on the edge portion 206. After that, the substrate 202 is transported by the ninth transport mechanism 102 to the second electrostatic blow mechanism 94 disposed at the next stage to remove the static electricity therefrom.

After that, the substrate is transported by the ninth transport mechanism 102 as well to the UV-curable solution application mechanism 96 to drip the UV-curable solution onto a part of the first principal surface of the substrate 202. Subsequently, the substrate 202 is transported by the ninth transport mechanism 102 as well to the spin mechanism 98 disposed at the next stage, and the substrate 202 is rotated at a high speed. Thus, the application thickness of the UV-curable solution dripped on the substrate 202 is made uniform over the entire substrate surface.

In this embodiment, the time schedule is managed such that the period of time after the formation of the light-reflective layer up to the application of the UV-curable solution is not less than 2 seconds and within 5 minutes.

After that, the substrate 202 is transported by the ninth transport mechanism 102 as well to the UV radiation mechanism 100 disposed at the next stage. The UV-curable solution on the substrate 202 is irradiated with the ultraviolet light. Accordingly, as shown in FIG. 14B, the protective layer 210 is formed by the UV-curable resin so that the dye recording layer 204 and the light-reflective layer 208 formed on the first principal surface of the substrate 202 are covered therewith. Thus, the optical disk D is constructed.

The protective layer 210 is provided on the light-reflective layer 208 in order that the dye recording layer 204 or the like is protected physically and chemically. The protective layer 210 may be also provided on the side of the substrate 202 on which the dye recording layer 204 is not provided, in order to enhance the scratch resistance and the humidity resistance. The material to be used for the protective layer 210 includes, for example, inorganic substance such as SiO, SiO₂, MgF₂, SnO₂, and Si₃N₄; and organic substance such as thermoplastic resin, thermosetting resin, and UV-curable resin.

The protective layer 210 can be formed, for example, such that a film obtained by plastic extrusion processing is laminated on the light-reflective layer 208 and/or the substrate 202 by the aid of an adhesive. Alternatively, the protective layer 210 may be provided, for example, by means of the method based on vacuum vapor deposition, sputtering, and application. When the thermoplastic resin or the thermosetting resin is used, the protective layer 210 can be also formed such that the resin is dissolved in an appropriate solvent to prepare an application solution, and then the application solution is applied, followed by drying.

When the UV-curable resin is used, the protective layer 210 can be formed as described above such that the resin is used as it is, or the resin is dissolved in an appropriate solvent to prepare an application solution, and then the application solution is applied to cure the resin by radiating the UV light. The application solution may be further added with various additives such as an antistatic agent, an antioxidant, and a UV-absorbing agent, depending on the purpose. The protective layer 210 is generally provided with a layer thickness within a range of 0.1 to 100 µm.

After that, the optical disk D is transported by the tenth transport mechanism 104 to the defect inspection mechanism 106 and the characteristic inspection mechanism 108 disposed at the next stage to inspect the optical disk D for the presence or absence of the defect on the surface of the dye recording layer 204 and the surface of the protective layer 210, and the signal characteristic based on the groove 200 formed on the substrate 202. These inspections are performed such that the both surfaces of the optical disk D are irradiated with the light respectively, and the reflected light therefrom is subjected to image processing by using, for example, CCD camera. The respective inspection results obtained by the defect inspection mechanism 106 and the characteristic inspection mechanism 108 are fed to the selection mechanism 114 disposed at the next stage.

The optical disk D, which has been completed for the defect inspection process and the characteristic inspection process described above, is transported and selected by the selection mechanism 114 into those to be stored on the stack pole 110 for normal products and those to be stored on the stack pole 112 for NG products, on the basis of the respective inspection results.

At the stage at which a predetermined number of optical disks D are stacked on the stack pole 110 for normal products, the stack pole 110 is taken out of the aftertreatment equipment 16 to be introduced into an unillustrated label-printing step.

As described above, the optical disk D produced by the production system 10 according to the embodiment of the present invention has the following feature. That is, when the dye solution is applied to the inner circumferential side of the substrate 202 in the process for applying the dye solution, the number of revolutions of the substrate 202 is increased about 2-fold as compared with the number of revolutions of the substrate 202 at the point of time of the start of the application. Therefore, the application thickness of the dye solution on the substrate 202 is approximately uniform over the entire surface of the substrate 202. Accordingly, it is possible to decrease the dispersion in level of the push-pull signal in the radial direction. Further, it is possible to allow the maximum level of the push-pull signal to be within the prescribed range. This results in the high quality of the optical disk D.

In the air-conditioning system 300 according to the embodiment of the present invention, the water having the specific resistance of not less than 0.15 MΩ is used as the humidification source for the humidifiers 332a, 332b. Therefore, it is possible to suppress the generation of floating impurities in the process atmosphere in the application equipment 14. Thus, it is possible to improve the yield of the product manufactured by the application equipment 14, i.e., the optical disk D. The resistance value is preferably not less than 1.5 MΩ, and most preferably not less than 10 MΩ.

In the embodiment of the present invention, the relative humidity in the process atmosphere in the application equipment 14 is set to be 30 % to 60 %. Accordingly, it is possible to achieve the uniform film thickness of the dye application surface and the formation of the application surface (dye recording layer) free from occurrence of error. The preferred range of the relative humidity is 40 % to 55 %. If the relative humidity is too high, the whitening phenomenon occurs on the dye application surface.

In order to reduce the error rate, it is preferable that the period of time from the application of the dye onto the substrate 202 to the formation of the light-reflective layer 208 is 15 minutes to 4 hours.

It is appropriate that the flow rate of air, which is constituted by the air supply to the process atmosphere in the application equipment 14 and the air discharge from the process atmosphere, is set to be not more than 0.8 m/sec. The flow rate is preferably 0.5 to 0.01 m/sec, and more preferably 0.3 to 0.03 m/sec, because of the following reason.

That is, if the flow rate is too small, the solvent vapor is accumulated in the dye application section. As a result, the solvent-drying speed is changed, and the dye film thickness is varied. The increase in solvent vapor concentration is not preferred in view of the safety as well. On the other hand, if the flow rate is too large, the uniform film thickness on the disk surface is deteriorated, i.e., for example, the dye film thickness becomes extremely thick at the outer circumference of the disk. Therefore, the excessively large flow rate is not preferred.

In the embodiment of the present invention, the air introduced through the inlet port 710 provided for the air conditioner 302, or the air from the dehumidifier 304 is used as the primary air "a1". The primary air "a1" is supplied to the air conditioner 302. The mixer 330 of the air conditioner 302 is used to mix the primary air "a1" with the discharge air "ra" from the application equipment 14 to obtain the mixed air "ha". The mixed air "ha" is subjected to the humidifying treatment to obtain the secondary air "a2" which is supplied to the application equipment 14. Accordingly, it is possible to construct the circulation system which uses the discharge air "ra" from the application equipment 14 for the purpose of air supply. Thus, it is possible to easily make the control to maintain the constant amount of the clean air "ca" to be supplied to the application equipment 14. Further, it is enough that a small amount of air is to be dehumidified by the dehumidifier 304. Therefore, it is possible to effectively reduce the time and the cost required for the dehumidification.

It is feared that the circulation system, which is provided for the air conditioner 302 and the second processing section 32 of the application equipment 14 according to the embodiment of the present invention, may have a negative pressure due to the influence of the local discharge air from the spin coat apparatus 52. However, in the embodiment of the present invention, the external air is introduced via the inlet port 710 of the air conditioner 302, and the air from the dehumidifier 304 is introduced especially when the low humidity control is made. Therefore, it is possible to avoid the negative pressure in the circulation system as described above.

In the embodiment of the present invention, the two lines are provided for the discharge line of the application equipment 14. One of the discharge lines (circulation system) is connected to the mixer 330 of the air conditioner 302, and the other discharge line (local discharge air "da") is connected to the superordinate discharge line 520 via the air-tight buffer box 500. Further, the discharge tube 524 of the superordinate discharge line 520 is separated in the buffer box 500 from the discharge tube 426 of the local discharge air "da".

In this arrangement, the local discharge air "da" in the application equipment 14 is discharged to the superordinate discharge line 520 via the buffer box 500. However, even when any dispersion occurs in the discharge amount of other equipment connected to the superordinate discharge line 520, the dispersion is absorbed in the buffer box 500.

In other words, even when any dispersion occurs in the discharge amount of other equipment connected to the superordinate discharge line 520, it is possible to obtain the constant air flow in the second processing section 32 (atmosphere in the second processing section 32) of the application equipment 14. Therefore, in the dye application step for the optical disk D, for example, it is possible to efficiently achieve the uniform film thickness on the application surface and the formation of the application surface (dye recording layer) on which no error occurs.

In the embodiment of the present invention, the plurality of directional control plates 342a to 342d and 344a to 344d are provided in the air supply passage to the application equipment 14. Therefore, the direction of the air outputted from the respective air blowers 334a to 334d can be easily changed by using the plurality of directional control plates 342a to 342d and 344a to 344d. Thus, the pressure in the atmosphere in the second processing section 32 of the application equipment 14 can be set to be higher than the pressures in the atmospheres in the first and third processing sections 30, 34. Accordingly, the temperature and the humidity of the second processing section 32 can be controlled highly accurately. It is possible to further efficiently achieve the uniform film thickness of the application surface and the formation of the application surface (dye recording layer) on which no error occurs.

In the embodiment of the present invention, the partition plates 70, 72 are provided between the first processing section 30 and the second processing section 32 and between the second processing section 32 and the third processing section 34 respectively. Therefore, it is possible to avoid the inflow of air from the first and third processing sections 30, 34 to the second processing section 32. Thus, it is possible to avoid any contamination of floating impurities from the first and third processing sections 30, 34 to the second processing section 32.

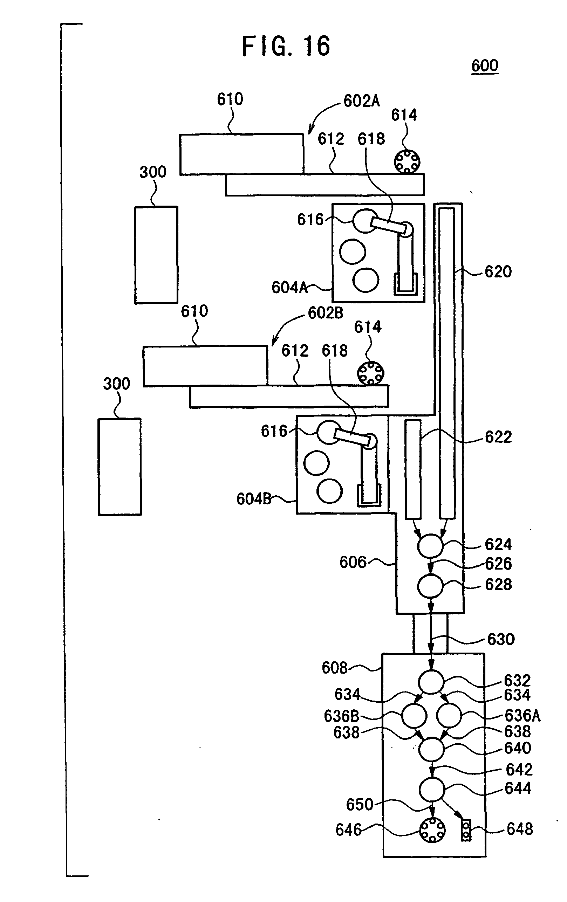

The optical disk D according to the embodiment of the present invention can be also produced by using a production system 600 shown in FIG. 16 in addition to the production system 10 shown in FIG. 1. The air-conditioning system according to the embodiment of the present invention can be also applied to the production system 600 shown in FIG. 16 in addition to the production system 10 shown in FIG. 1.

The production system 600 shown in FIG. 16 comprises two molding equipments (first and second molding equipments 602A, 602B) for manufacturing substrates by means of, for example, injection molding, compression molding, or injection compression molding, two application equipments (first and second application equipments 604A, 604B) for applying a dye solution onto a first principal surface of the substrate followed by drying to form a dye recording layer on the substrate, an inspection equipment 606 for inspecting the dye recording layer formed in the application equipments 604A, 604B, and an aftertreatment equipment 608 for forming a light-reflective layer on the dye recording layer of the substrate by means of, for example, sputtering followed by application of a UV-curable solution on the light-reflective layer to perform UV irradiation thereafter so that a protective layer is formed on the light-reflective layer.

Each of the first and second molding equipments 602A, 602B includes a molding machine 610 for injection-molding, compression-molding, or injection compression-molding a resin material such as polycarbonate to manufacture the substrate formed on its first principal surface with a tracking groove or convexity and concavity (groove) for representing information such as address signal, and a cooling conveyer 612 for cooling the substrate taken out of the molding machine 610 while transporting the substrate. A stack pole 614 for stacking and storing the substrates after the cooling is installed at the terminal end of the cooling conveyer 612.

Each of the first and second application equipments 604A, 604B includes three spin coat apparatuses 616 for applying the dye and washing the edge, and an articulated robot 618 for taking out, one by one, the substrate accumulated on the stack pole 614 of the first and second molding equipment 602A, 602B to transport the substrate to any one of the spin coat apparatuses 616.

The inspection equipment 606 includes a first transport conveyer 620 for transporting, to the next step, the substrate completed for the process effected by the first application equipment 604A, a second transport conveyer 622 for transporting, to the next step, the substrate completed for the process effected by the second application equipment 604B, a numbering mechanism 624 for marking the lot number or the like onto the substrate transported by the first and second transport conveyers 620, 622, a first transport mechanism 626 for transporting, to the next step, the substrate completed for the marking of the lot number or the like, and an inspection mechanism 628 for inspecting the substrate transported by the first transport mechanism 626 for the presence or absence of defect and for the film thickness of the dye recording layer.

The aftertreatment equipment 608 includes a substrate import mechanism 630 for receiving the substrate completed for the inspection process effected by the inspection mechanism 628, a sputtering mechanism 632 for forming, by sputtering, a light-reflective layer on the first principal surface of the substrate imported by the substrate import mechanism 630, a second transport mechanism 634 for successively transporting, to the next step, the substrate completed for the formation of the light-reflective layer by the sputtering, two application spin mechanisms (first and second application spin mechanisms 636A, 636B) for applying UV-curable solution to the substrate transported by the second transport mechanism 634 and then rotating the substrate at a high speed to obtain a uniform application thickness of the UV-curable solution on the substrate, a third transport mechanism 638 for transporting, to the next step, the substrate completed for the process effected by any one of the first and second application spin mechanisms 636A, 636B, a UV radiation mechanism 640 for forming a protective layer on the first principal surface of the substrate by curing the UV-curable solution by radiating the ultraviolet light onto the substrate transported by the third transport mechanism 638, a fourth transport mechanism 642 for transporting the UV-radiated substrate to the next step, a defect inspection mechanism 644 for inspecting the substrate transported by the fourth transport mechanism 642 for the defect on the application surface and the protective layer surface, and a selection mechanism 650 for selecting the substrate into those to be stacked on a stack pole 646 for normal products and those to be stacked on a stack pole 648 for NG products, depending on the inspection result obtained by the defect inspection mechanism 644. The air-conditioning systems 300 as described above are installed in juxtaposition with the first and second application equipments 604A, 604B respectively. Accordingly, it is possible to suppress the generation of floating impurities in the atmospheres in the first and second application equipments 604A, 604B. Thus, it is possible to improve the yield of the product, i.e., the optical disk D produced by the first and second application equipments 604A, 604B.

Also in the production system 600, when the dye solution is applied to the inner circumferential side of the substrate 202 in the process for applying the dye solution onto the substrate 202, the number of revolutions of the substrate 202 is increased about 2-fold as compared with the number of revolutions of the substrate 202 at the point of time of the start of the application. Therefore, the application thickness of the dye solution on the substrate 202 is approximately uniform over the entire surface of the substrate 202. Accordingly, it is possible to decrease the dispersion in level of the push-pull signal in the radial direction. Thus, it is possible to contemplate the high quality of the optical disk D.

In the production systems 10, 600 described above, the substrate 202 is continuously transported after forming the film of the light-reflective layer 208 to drip the UV-curable solution in order to form the protective layer on the light-reflective layer 208. Alternatively, the substrates 202 formed with the film of the light-reflective layer 208 may be once accumulated, and the UV-curable solution may be added dropwise onto the substrate 202, for example, in accordance with the sheet-feed procedure. In this case, the following process may be adopted without any problem. That is, the substrates 202, each of which is formed with the film of the light-reflective layer 208, are stacked on the stack pole, and they are transported, for example, to the UV-curable solution application step disposed at the next stage. However, it is preferable that the step of forming the light-reflective layer 208 and the step of applying the UV-curable solution are on the continuous line.

Next, two illustrative experiments (conveniently referred to as "first and second illustrative experiments") will be explained.

At first, the first illustrative experiment relates to Working Examples 1 to 3 and Comparative Examples 1 to 5 for producing the optical disk D by using the production system 10 shown in FIG. 1 to observe the light reflectance, the error rate, and the preservation performance of the optical disk D obtained by changing the humidification source for the humidifiers 332a, 332b of the air-conditioning system 300, the temperature and the humidity in the application equipment 14, and the period of time required from the application of the dye to the formation of the film of the light-reflective layer (hereinafter conveniently referred to as "dye application elapsed time") respectively.

The light reflectance represents the light reflectance obtained when no pit is formed for the groove, i.e., in the no recording state. It is prescribed that the light reflectance is not less than 65 % during reproduction on the actual optical disk D. Therefore, it is sufficient that the light reflectance in the no recording state is not less than 70 %. The error rate represents the block error rate. The preservation performance is obtained by observing the state of the dye recording layer after being left to stand for 250 hours in the atmosphere having a temperature of 60 °C and a humidity of 85 %.

The dye recording layer 204 was formed as follows. A cyanine dye compound (2.65 g) represented by the following general formula (A1) and a fading-preventive agent (0.265 g) represented by the following general formula (A2) were combined and blended with each other, and they were dissolved in 2,2,3,3-tetrafluoro-1-propanol represented by the following general formula (A3) to prepare a dye solution for forming the recording layer.

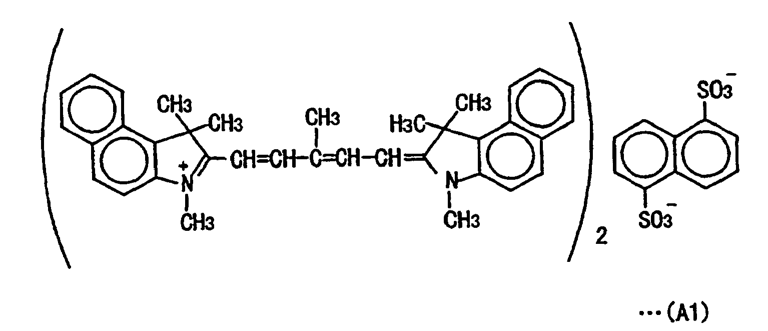

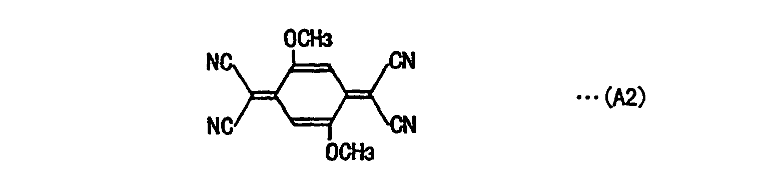

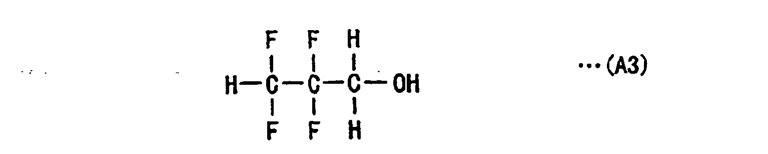

A polycarbonate substrate (diameter: 120 mm, thickness: 1.2 mm) was prepared, including a spiral groove (track pitch: 1.6 µm, groove width: 0.4 µm, groove depth: 0.16 µm) formed on its surface by means of injection molding. The dye solution described above was applied to the surface on the side of the groove of the polycarbonate substrate.

When the dye solution was applied, the dye solution was applied by means of spin coat while changing the number of revolutions of the polycarbonate substrate from 300 rpm to 2000 rpm to form the dye recording layer (thickness (in the groove): about 200 nm). During this process, the air was allowed to flow downwardly toward the substrate in accordance with the air supply to the application equipment and the air discharge from the application equipment. The wind speed was set to be 0.1 m/sec.

In Working Example 1, pure water having a specific resistance of 2 MΩ · cm was used as the humidification source, the temperature and the humidity in the application equipment 14 were set to be 25 °C and 30 % respectively, and the dye application elapsed time was 1 hour. In Working Example 2, pure water having a specific resistance of 2 MΩ · cm was used as the humidification source, the temperature and the humidity in the application equipment 14 were set to be 25 °C and 60 % respectively, and the dye application elapsed time was 4 hours. In Working Example 3, pure water having a specific resistance of 2 MΩ · cm was used as the humidification source, the temperature and the humidity in the application equipment 14 were set to be 25 °C and 40 % respectively, and the dye application elapsed time was 15 minutes.

On the other hand, in Comparative Example 1, tap water having a specific resistance less than 0.15 MΩ · cm was used as the humidification source, the temperature and the humidity in the application equipment 14 were set to be 25 °C and 40 % respectively, and the dye application elapsed time was 20 minutes. In Comparative Example 2, pure water having a specific resistance of 2 MΩ · cm was used as the humidification source, the temperature and the humidity in the application equipment 14 were set to be 25 °C and 25 % respectively, and the dye application elapsed time was 4 hours. In Comparative Example 3, pure water having a specific resistance of 2 MΩ · cm was used as the humidification source, the temperature and the humidity in the application equipment 14 were set to be 25 °C and 55 % respectively, and the dye application elapsed time was 6 hours. In Comparative Example 4, pure water having a specific resistance of 2 MΩ · cm was used as the humidification source, the temperature and the humidity in the application equipment 14 were set to be 25 °C and 55 % respectively, and the dye application elapsed time was 10 minutes.

In Comparative Example 5, pure water having a specific resistance of 2 MΩ · cm was used as the humidification source, and the temperature and the humidity in the application equipment 14 were set to be 25 °C and 65 % respectively. As a result, the white turbidity appeared during the application of the dye, and the obtained product was apparently defective.

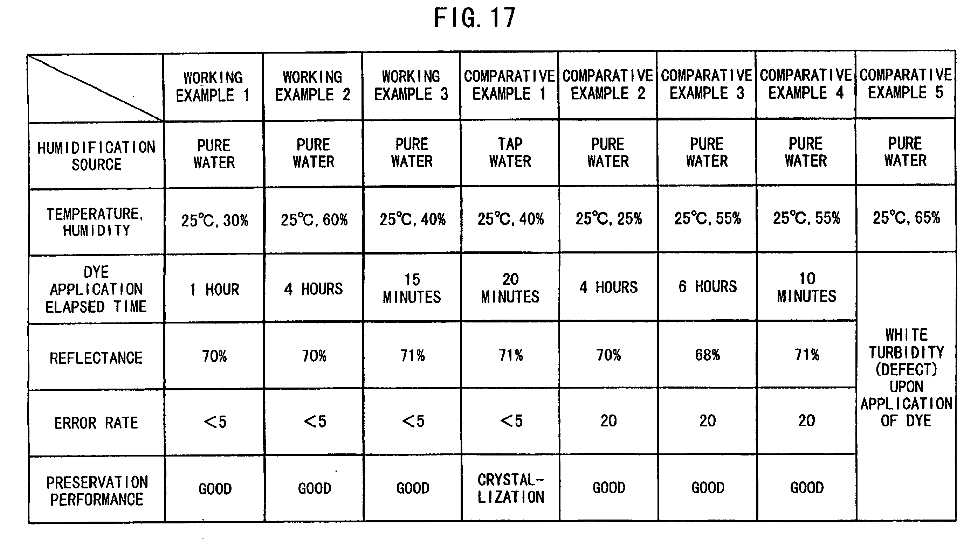

Obtained experimental results are shown in FIG. 17. According to the experimental results, it is understood that the good results were obtained concerning the light reflectance, the error rate, and the preservation performance in Working Examples 1 to 3 in which the pure water was used as the humidification source, the humidity in the application equipment was set to be 30 % to 60 %, and the dye application elapsed time was 15 minutes to 4 hours, as compared with those obtained in Comparative Examples 1 to 4.

The error rate and the reflectance were measured in accordance with the following method. That is, the optical disks obtained in Working Examples 1 to 3 and Comparative Examples 1 to 5 as described above were subjected to recording performed at a recording power of 7 mW for EFM modulated signal at a constant linear velocity of 1.2 m/sec at a laser beam wavelength of 780 nm (pick up at NA 0.5) by using an evaluating machine of OMT 2000 (produced by Pulstec Industrial Co., Ltd.). After that, the signal was reproduced at a laser output of 0.5 mW by using the laser beam having the same wavelength as that of the recording laser beam to measure the reflectance and the error (block error: BLER).

As for the reflectance measurement, the intensity of the returning light was measured when the groove tracking was applied. As for the error, the block error (BLER) was measured when the decoding was performed by using the decoder contained in the evaluating machine.

Next, the second illustrative experiment will be explained. The second illustrative experiment relates to Working Examples 1 to 3 and Comparative Examples 1 and 2 in the case of the production of the optical disk D by using the production system shown in FIG. 1 to observe the light reflectance and the level of the push-pull signal at a predetermined position on the optical disk D by changing the wind speed and the application pattern on the application surface respectively in the process for applying the dye solution to the substrate 202.

The light reflectance (%) indicates the light reflectance obtained when no pit is formed for the groove, i.e., in the no recording state. It is prescribed that the light reflectance is not less than 65 % during reproduction on the actual optical disk D. Therefore, it is sufficient that the light reflectance in the no recording state is not less than 67 %.

The push-pull signal was investigated by radiating the laser beam onto the completed optical disks D concerning Working Examples 1 to 3 and Comparative Examples 1 and 2 to observe the respective maximum levels (absolute values) at three points (points of radius of 23 mm, 45 mm, and 58 mm) respectively.

If the maximum level of the push-pull signal is less than 0.09, the tracking deviation tends to occurs. On the other hand, if the maximum level of the push-pull signal is not less than 0.14, it is indicated that the light reflectance is too low.

The respective dye solutions for forming the dye recording layer 204 were prepared in the same manner as in the first illustrative experiment described above, explanation of which will be omitted.

The dye solution was applied to the surface on the side of the groove of the polycarbonate substrate. During this process, the dye solution was applied by means of the spin coat while changing the number of revolutions from 270 rpm to 2000 rpm to form the dye recording layer (thickness (in the groove): about 200 nm).

The wind speed was 0.1 m/sec in Working Example 1, 0.2 m/sec in Working Example 2, 0.4 m/sec in Working Example 3, 0.6 m/sec in Comparative Example 1, and 0.1 m/sec in Comparative Example 2.

The application pattern of the dye solution is illustrative of the case concerning Working Examples 1 to 3 and Comparative Example 1 in which the application was performed in accordance with the steps shown in FIG. 15 (conveniently referred to as "A pattern"). As for Comparative Example 2, the application pattern of the dye solution is illustrative of the case in which the application was performed such that the number of revolutions of the substrate 202 was 270 rpm, i.e., the number of revolutions of the substrate 202 was not changed in the step S3 shown in FIG. 15 (conveniently referred to as "B pattern").

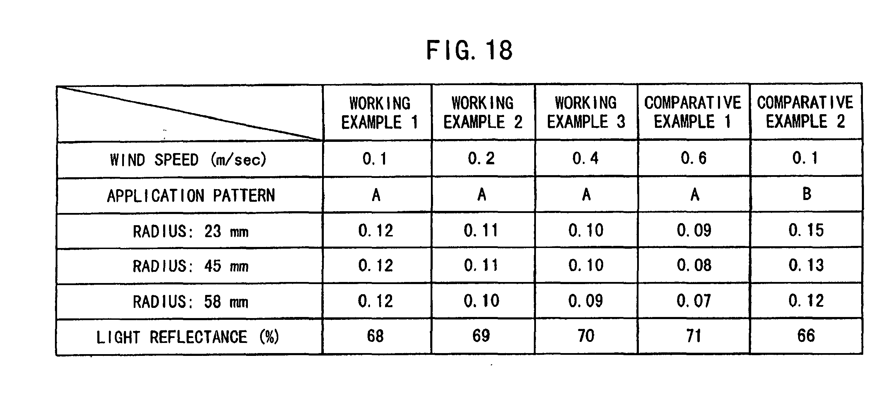

Obtained experimental results are shown in FIG. 18. According to the experimental results, the maximum level of the push-pull signal was within a range of 0.09 to 0.12 at the three points, and it was approximately constant over the three point in Working Examples 1 to 3 in which the application pattern was A pattern, and the wind speed was not more than 0.4 m/sec. Further, the light reflectance was not less than 68 % in the no recording state.

On the other hand, in Comparative Example 1, the light reflectance was sufficient. However, the maximum level of the push-pull signal was not more than 0.09 at the three points. It is understood that any trouble occurred concerning the tracking servo.

Comparative Example 2 indicates the fact that the maximum level of the push-pull signal was 0.15 at the position of radius of 23 mm, and the light reflectance was insufficient. The measured light reflectance was 66 %, which did not satisfy the prescribed light reflectance of 67 %.

As described above, it is understood that the good results were obtained concerning the maximum level of the push-pull signal and the light reflectance in Working Examples 1 to 3 as compared with Comparative Examples 1 and 2.

## Claims

1. A method for producing an optical information-recording medium of a heat mode type comprising, on a substrate (202), a recording layer (204) capable of recording information by being irradiated with a laser beam, said method being **characterised in that** it comprises the step of:
forming said recording layer (204) on said substrate (202) by using water having a specific resistance of not less than 0.15 MΩ to humidify a process atmosphere employed to form said recording layer (204) and wherein a relative humidity in said process atmosphere is set to be 30 % to 60 %.

2. The method according to claim 1, wherein a period of time, which is required from application of a dye to said substrate (202) to formation of a light-reflective layer (208) as a film is 15 minutes to 4 hours.

3. The method according to any one of claims 1 or 2, wherein a flow rate of air to be supplied to said substrate (202), which is constructed by air supply to said process atmosphere and air discharge from said process atmosphere, is set to be not more than 0.8 m/sec.

4. An air-conditioning system for producing an optical information-recording medium according to the method of claim 1, 2 or 3, comprising:
a dehumidifying means (304) for processing and dehumidifying air to obtain primary air (a1);
a humidifying means (332a, 332b) for processing and humidifying at least said primary air (a1) to obtain secondary air (a2); and
an air feed means (334a to 334d) for supplying said secondary air (a2) to an equipment (14) for producing said optical information-recording medium (D) of a heat mode type comprising, on a substrate (202), a recording layer (204) capable of recording information by being irradiated with a laser beam, **characterised in**
water having a specific resistance of not less than 0.15 MΩ as a humidification source (336) for said humidifying means (332a, 332b).

5. The air-conditioning system according to claim 4, wherein said dehumidifying means (304) introduces external air (ea) to perform said dehumidification.

6. The air-conditioning system according to claim 4 or 5, further comprising:
a mixing means (330) for introducing discharge air (ra) from said equipment (14) to mix it with said primary air (a1), wherein:
said humidifying means (332a, 332b) processes and humidifies mixed air (ha) from said mixing means (330) to obtain said secondary air (a2).

7. The air-conditioning system according to claim 6, further comprising:
at least two discharge lines for said equipment (14), wherein:
said first discharge line (322) is connected to said mixing means (330);
said second discharge line (502) is connected via an air-tight buffer unit (500) to a superordinate discharge line (520) supervising said equipment (14); and
a discharge tube (524) of said superordinate discharge line (520) is separated in said buffer unit (500) from a discharge tube (426) of said second discharge line (502).

8. The air-conditioning system according to any one of claims 4 to 7, wherein:
said air feed means (334a to 334d) includes an air feed amount control means for controlling an air feed amount to said equipment (14) so that a pressure in an atmosphere of at least one processing section (32) arranged at a central portion, of a plurality of processing sections (30, 32, 34) for constructing said equipment (14) is higher than pressures in atmospheres of a plurality of said processing sections (30, 34) arranged at peripheral portions of said equipment (14).

9. The air-conditioning system according to claim 8, wherein said air feed amount control means includes a plurality of directional control plates (342a to 342d, 344a to 344d) arranged in an air supply passage to said equipment (14).

10. The air-conditioning system according to claim 8 or 9, wherein said air feed amount control means includes partition plates (70, 72) installed between at least one of said processing sections (32) arranged at said central portion of said equipment (14) and said plurality of processing sections (30, 34) arranged at said peripheral portions of said equipment (14).

## Revendications

1. Procédé pour produire un support optique d'enregistrement d'information du type à mode utilisant une chaleur, comprenant, sur un substrat (202), une couche d'enregistrement (204) apte à enregistrer une information lorsqu'elle est irradiée par un fuseau laser, ledit procédé étant **caractérisé en ce qu'**il comprend l'étape consistant à :
former ladite couche d'enregistrement (204) sur ledit substrat (202) en utilisant de l'eau ayant une résistance spécifique non inférieure à 0,15 MΩ pour humidifier une atmosphère de traitement utilisée pour former ladite couche d'enregistrement (204), et selon lequel une humidité relative dans ladite atmosphère de traitement est réglée de manière à être comprise de 30 % à 60 %.

2. Procédé selon la revendication 1, selon lequel un intervalle de temps, qui est nécessaire à partir de l'application d'un colorant sur ledit substrat (202) jusqu'à la formation d'une couche (208) de réflexion de la lumière sous la forme d'un film, s'étend de 15 minutes à 4 heures.

3. Procédé selon l'une quelconque des revendications 1 ou 2, dans lequel un débit d'air devant être envoyé audit substrat (202), qui est constitué par une alimentation en air envoyée à ladite atmosphère de traitement et une évacuation d'air à partir de ladite atmosphère de traitement, est réglé de manière à ne pas être supérieur à 0,8 m/s.

4. Système de conditionnement d'air pour produire un support optique d'enregistrement d'informations conformément au procédé selon la revendication 1, 2 ou 3, comprenant :
des moyens de déshumidification (304) pour traiter et déshumidifier l'air pour obtenir un air primaire (a1) ;
des moyens d'humidification (332a,332b) pour traiter et humidifier au moins ledit air primaire (a1) pour obtenir de l'air secondaire (a2); et
des moyens d'alimentation en air (334a à 334d) pour envoyer ledit air secondaire (a2) à un équipement (14) pour produire ledit support optique d'enregistrement d'information (D) du type à mode utilisant une chaleur, comprenant, sur un substrat (202), une couche d'enregistrement (204) permettant l'enregistrement d'une information en étant irradiée par un faisceau laser, **caractérisé par**
de l'eau possédant une résistance spécifique non inférieure à 0,15 mΩ en tant que source d'humidification (336) pour lesdits moyens d'humidification (332a,332b).

5. Système de conditionnement d'air selon la revendication 4, dans lequel lesdits moyens de déshumidification (304) introduisent de l'air externe (ea) pour effectuer ladite déshumidification.

6. Système de conditionnement d'air selon la revendication 4 ou 5, comprenant en outre :
des moyens de mélange (330) pour introduire de l'air d'évacuation (ra) à partir dudit équipement (14) afin de le mélanger audit air primaire (a1), dans lequel:
lesdits moyens d'humidification (332a, 332b) traitent et humidifient de l'air mélangé (ha) fourni par lesdits moyens de mélange (330) pour obtenir ledit air secondaire (a2).

7. Système de conditionnement d'air selon la revendication 6, comprenant en outre :
au moins deux canalisations d'évacuation pour ledit équipement (14), dans lequel :
ladite première canalisation d'évacuation (322) est raccordée auxdits moyens de mélange (330);
ladite seconde canalisation d'évacuation (502) est raccordée par l'intermédiaire d'une unité formant tampon étanche à l'air (500) à une canalisation d'évacuation de rang supérieur (520) supervisant ledit équipement (14); et
un tube d'évacuation (524) de ladite canalisation d'évacuation de rang supérieur (520) est séparé dans ladite unité tampon (500), d'un tube d'évacuation (426) de ladite seconde canalisation d'évacuation (502).

8. Système de conditionnement d'air selon l'une quelconque des revendications 4 à 7, dans laquelle :
lesdits moyens d'alimentation en air (334a à 334d) incluent des moyens de réglage de la quantité d'alimentation en air pour commander une quantité d'alimentation en air envoyée audit équipement (14) de telle sorte qu'une pression dans une atmosphère d'au moins une section de traitement (32) disposée en tant que partie centrale, d'une pluralité de sections de traitement (30,32,34) destinées à constituer ledit équipement (14) est supérieure à des pressions dans des atmosphères d'une pluralité desdites sections de traitement (30,34) disposées dans des parties périphériques dudit équipement (14).

9. Système de conditionnement d'air selon la revendication 8, dans lequel lesdits moyens de réglage de la quantité d'alimentation en air incluent une pluralité de plaques de commande directionnelle (342a à 342d, 344a à 344d), disposées dans un passage d'alimentation en air aboutissant audit équipement (14).

10. Système de conditionnement d'air selon la revendication 8 ou 9, dans lequel lesdits moyens de réglage de la quantité d'alimentation en air incluent des plaques de séparation (70,72) installées entre au moins l'une desdites sections de traitement (32) disposées dans ladite partie centrale dudit équipement (14) et ladite pluralité de sections de traitement (30,34) disposées dans lesdites parties périphériques dudit équipement (14).

## Patentansprüche

1. Verfahren zur Herstellung eines optischen Informationsaufzeichnungsmediums mittels Wärme, das auf einem Substrat (202) eine Aufzeichnungsschicht (204) umfasst, die Informationen aufzeichnen kann, indem sie mit einem Laserstrahl bestrahlt wird, wobei das Verfahren **dadurch gekennzeichnet ist, dass** es den folgenden Schritt umfasst:
Ausbilden der Aufzeichnungsschicht (204) auf dem Substrat (202) unter Verwendung von Wasser, das einen spezifischen elektrischen Widerstand von mindestens 0,15 MΩ aufweist, um eine Bearbeitungsatmosphäre zu befeuchten, die verwendet wird, um die Aufzeichnungsschicht (204) auszubilden, und worin in der Bearbeitungsatmosphäre eine relative Feuchtigkeit auf 30% bis 60% festgelegt wird.

2. Verfahren nach Anspruch 1, worin eine Zeitspanne, die von der Anwendung eines Farbstoffs auf das Substrat (202) bis zur Ausbildung einer Licht reflektierenden Schicht (208) als ein Film erforderlich ist, 15 Minuten bis 4 Stunden beträgt

3. Verfahren nach einem der Ansprüche 1 oder 2, worin eine Strömungsgeschwindigkeit von Luft, die dem Substrat (202) zugeführt werden soll, die durch Luftzufuhr zu der Bearbeitungsatmosphäre und Luftableitung aus der Bearbeitungsat mosphäre gebildet wird, auf höchstens 0,8 m/s festgelegt wird.

4. Klimatisierungssystem zur Herstellung eines optischen Informationsaufzeichnungsmediums nach dem Verfahren von Anspruch 1, 2 oder 3, das umfasst:
eine Entfeuchtungseinrichtung (304) zur Bearbeitung und Entfeuchtung von Luft, um Primärluft (a1) zu erhalten;
eine Befeuchtungseinrichtung (332a, 332b) zur Bearbeitung und Befeuchtung von mindesten der Primärluft (a1), um Sekundärluft (a2) zu erhalten; und
eine Luftzuführeinrichtung (334a bis 334d) zur Zuführung der Sekundärluft (a2) zu einer Anlage (14) zur Herstellung eines optischen Informationsaufzeichnungsmediums (D) mittels Wärme, das auf einem Substrat (202) eine Aufzeichnungsschicht (204) umfasst, die Informationen aufzeichnen kann, indem sie mit einem Laserstrahl bestrahlt wird, **gekennzeichnet durch**
Wasser, das einen spezifischen elektrischen Widerstand von mindestens 0,15 MΩ aufweist, als eine Befeuchtungsquelle (336) für die Befeuchtungseinrichtung (332a, 332b).

5. Klimatisierungssystem nach Anspruch 4, worin die Entfeuchtungseinrichtung (304) Außenluft (ea) einführt, um die Entfeuchtung durchzuführen.

6. Klimatisierungssystem nach Anspruch 4 oder 5, das ferner umfasst:
eine Mischeinrichtung (330) zur Einführung von Abluft (ra) von der Anlage (14), um sie mit der Primärluft (a1) zu mischen, worin:
die Befeuchtungseinrichtung (332a, 332b) die gemischte Luft (ha) von der Mischeinrichtung (330) bearbeitet und befeuchtet, um die Sekundärluft (a2) zu erhalten.

7. Klimatisierungssystem nach Anspruch 6, das ferner umfasst:
mindestens zwei Abflussleitungen für die Anlage (14), worin:
die erste Abflussleitung (322) mit der Mischeinrichtung (330) verbunden ist;
die zweite Abflussleitung (502) Ober eine luftdichte Puffereinheit (500) mit einer übergeordneten Abflussleitung (520) verbunden ist, die die Anlage (14) überwacht; und
ein Abflussrohr (524) der übergeordneten Abflussleitung (520) wird in der Puffereinheit (500) von einem Abflussrohr (426) der zweiten Abflussleitung (502) abgesondert.

8. Klimatisierungssystem nach einem der Ansprüche 4 bis 7, worin:
die Luftzuführeinrichtung (334a - 334d) eine Luftzufuhr-Mengensteuerungseinrichtung zur Steuerung einer Luftzufuhrmenge zu der Anlage (14) beinhaltet, so dass ein Druck in einer Atmosphäre mindestens eines Bearbeitungsbereichs (32), der in einem Mittelabschnitt einer Vielzahl von Bearbeitungsbereichen (30, 32, 34) für den Aufbau der Anlage (14) angeordnet ist, höher ist als die Drücke in den Atmosphären einer Vielzahl der Bearbeitungsbereiche (30, 34), die in den peripheren Abschnitten der Anlage (14) angeordnet sind.

9. Klimatisierungssystem nach Anspruch 8, worin die Luftzufuhr-Mengensteuerungseinrichtung eine Vielzahl von Richtungssteuerungsplatten (342a bis 342d, 344a bis 344d) beinhaltet, die in einem Luftzufuhrkanal zu der Anlage (14) angeordnet sind.

10. Klimatisierungssystem nach Anspruch 8 oder 9, worin die Luftzufuhr-Mengensteuerungseinrichtung Trennplatten (70, 72) beinhaltet, die zwischen mindestens einem der Bearbeitungsbereiche (32), die in einem Mittelabschnitt der Anlage (14) angeordnet sind und der Vielzahl der Bearbeitungsbereiche (30, 34), die in den peripheren Abschnitten der Anlage (14) angeordnet sind, eingebaut sind.
